(19) Europäisches Patentamt
European Patent Office
Office européen des brevets

(11) **EP 3 547 562 A1**

(12) **EUROPEAN PATENT APPLICATION**
published in accordance with Art. 153(4) EPC

(43) Date of publication:
**02.10.2019 Bulletin 2019/40**

(51) Int Cl.:
***H04B 7/0456*** (2017.01)

(21) Application number: **18736058.1**

(22) Date of filing: **05.01.2018**

(86) International application number:
**PCT/CN2018/071618**

(87) International publication number:
**WO 2018/127142 (12.07.2018 Gazette 2018/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **05.01.2017 CN 201710008589**

(71) Applicant: **Huawei Technologies Co., Ltd.
Longgang District
Shenzhen, Guangdong 518129 (CN)**

(72) Inventors:
• JI, Liuliu
  Shenzhen
  Guangdong 518129 (CN)
• HUANG, Yi
  Shenzhen
  Guangdong 518129 (CN)
• LI, Yuanjie
  Shenzhen
  Guangdong 518129 (CN)

(74) Representative: **Epping - Hermann - Fischer
Patentanwaltsgesellschaft mbH
Schloßschmidstraße 5
80639 München (DE)**

(54) **COMMUNICATION METHOD, APPARATUS AND SYSTEM**

(57) Embodiments of this application provide a communications method, apparatus, and system. The method includes: receiving, by a terminal, configuration information from a radio access network (RAN) node, where the configuration information is used to configure precision of a multi-stage codebook, and codebook precision at different stages is different; and performing, by the terminal, reporting for codebook information based on the configuration information, where information about an $M^{th}$-stage codebook limits a range of an $(M+1)^{th}$-stage codebook, and M is a positive integer and is less than a codebook stage quantity. The RAN node configures the precision of the multi-stage codebook for the terminal to enable the codebook precision at all the stages to be different, to obtain a more flexible codebook. In addition, information about a previous-stage codebook limits a range of a current-stage codebook, so that the terminal can perform codebook measurement and reporting within a specific range, thereby reducing reporting overheads.

FIG. 7

**Description**

**TECHNICAL FIELD**

This application relates to the field of communications technologies, and in particular, to a communication method, apparatus, and system.

**BACKGROUND**

With development of wireless communications technologies, a wireless network is increasingly popular, and people impose an increasingly high performance requirement on the wireless network. Therefore, various technologies are introduced into the wireless network, to improve performance of the wireless network. For example, in a new radio access technology (New Radio Access Technology, NR), a massive multiple-input multiple-output (Massive Multiple Input Multiple Output, Massive MIMO) technology is used. As a massive multiple-antenna technology develops, for example, as a planar array antenna (also referred to as a panel antenna array) is used, a higher spatial degree of freedom can be used in the Massive MIMO technology to form a more flexible beam and further improve a system capacity. Therefore, Massive MIMO is one of key technologies in the NR.

A precoding technology is one of important means of improving performance in massive MIMO. The precoding technology means that a transmitting end such as a base station preprocesses data that needs to be sent, to reduce interference between data flows of a same terminal or different terminals and improve system performance. Precoding processing is usually performed at the transmitting end based on channel information. The channel information may be reported by the terminal, or may be obtained by performing measurement by the transmitting end when channel reciprocity is met.

The channel information reported by the terminal may include codebook information such as a precoding matrix indication (Precoding Matrix Indication, PMI). Currently, a structure of a codebook is not flexible enough and does not meet requirements of different scenarios, and overall overheads are relatively large.

**SUMMARY**

In view of this, this application provides a communications method, apparatus, and system, to improve flexibility of a codebook to meet requirements of different scenarios.

According to a first aspect, a communication method is provided, including: receiving, by a terminal, configuration information from a radio access network (RAN) node, where the configuration information is used to configure precision of a multi-stage codebook, and codebook precision at different stages is different; and performing, by the terminal, reporting for codebook information based on the configuration information, where information about an $M^{th}$-stage codebook limits a range of an $(M+1)^{th}$-stage codebook, and M is a positive integer and is less than a codebook stage quantity.

According to a second aspect, a communication method is provided, including: generating, by a RAN node, configuration information, where the configuration information is used to configure precision of a multi-stage codebook, and codebook precision at different stages is different; sending, by the RAN node, the configuration information to a terminal, where the configuration information is used by the terminal to perform reporting for codebook information, information about an $M^{th}$-stage codebook limits a range of an $(M+1)^{th}$-stage codebook, and M is a positive integer and is less than a codebook stage quantity; and receiving, by the RAN node, information that is about a codebook and reported by the terminal, and determining a precoding matrix based on the received information about the codebook.

In the foregoing method, after reporting information about a current-stage codebook, the terminal may know a range of a next-stage codebook, and perform measurement and reporting within a corresponding range, thereby narrowing a range in which measurement and reporting are performed and reducing overheads of the terminal. After receiving information about a codebook, the RAN node may determine the precoding matrix based on information about a previous-stage codebook and the currently received information about a codebook, thereby reducing an overhead requirement of codebook information when the precoding matrix is determined at each stage.

The precision of a codebook may also be referred to as codebook precision or codebook resolution, and is used to reflect an angle spacing (or an angle difference) between precoding vectors in a codebook, or is used to reflect an angle spacing (or an angle difference) between spatial beams corresponding to precoding vectors. Alternatively, the codebook precision is used to reflect a width of a space-domain directivity pattern of a precoding vector in a codebook, for example, angle spread.

The codebook information includes a first codebook index and a second codebook index. The first codebook index is used to select a vector group. The vector group includes a plurality of precoding vectors that reflect a long-term or wideband channel feature. The second codebook index is used to select a precoding vector from a vector group selected by using a first codebook index of information about a codebook at a same stage. The precoding vector reflects a short-term or narrowband channel feature. Information that is about a first-stage codebook and that is reported by the terminal includes a first codebook index and a second codebook index, or includes a second codebook index. Information that is about a second-stage codebook and a higher-stage codebook and that is reported by the terminal includes a second codebook index.

Starting at the second stage, a range of a codebook is limited by information about a previous-stage codebook. Therefore, starting at the second stage, the terminal may no longer report the first codebook index, that is, reported information about a codebook may include only the second codebook index. In this way, reporting overheads can be reduced.

That information about an $M^{th}$-stage codebook limits a range of an $(M+1)^{th}$-stage codebook may be implemented in the following manner: A second codebook index of the information about the $M^{th}$-stage codebook limits a value of a first codebook index of information about the $(M+1)^{th}$-stage codebook; or a first codebook index and a second codebook index that are of the information about the $M^{th}$-stage codebook limit a value of a first codebook index of information about the $(M+1)^{th}$-stage codebook.

The first codebook index and the second codebook index that are of the information about the first-stage codebook may be reported together, or may be separately reported. An advantage of reporting the first codebook index and the second codebook index together is that the RAN node can determine the precoding matrix based on information about a codebook reported for the first time. An advantage of separately reporting the first codebook index and the second codebook index is that overheads of one-time reporting can be reduced in a bit-limited case.

Optionally, the first codebook index includes a horizontal-dimension codebook index and a vertical-dimension codebook index. In this case, that information about an $M^{th}$-stage codebook limits a range of an $(M+1)^{th}$-stage codebook includes the following: The second codebook index of the information about the $M^{th}$-stage codebook limits a value of a horizontal-dimension codebook index of the information about the $(M+1)^{th}$-stage codebook; or a horizontal-dimension codebook index and the second codebook index that are of the information about the $M^{th}$-stage codebook limit a value of a horizontal-dimension codebook index of the information about the $(M+1)^{th}$-stage codebook. Alternatively, the second codebook index of the information about the $M^{th}$-stage codebook limits a value of a vertical-dimension codebook index of the information about the $(M+1)^{th}$-stage codebook; or a vertical-dimension codebook index and the second codebook index that are of the information about the $M^{th}$-stage codebook limit a value of a vertical-dimension codebook index of the information about the $(M+1)^{th}$-stage codebook. Alternatively, the second codebook index of the information about the $M^{th}$-stage codebook limits a value of a horizontal-dimension codebook index and a value of a vertical-dimension codebook index that are of the information about the $(M+1)^{th}$-stage codebook; or a horizontal-dimension codebook index, a vertical-dimension codebook index, and the second codebook index that are of the information about the $M^{th}$-stage codebook limit a value of a horizontal-dimension codebook index and a value of a vertical-dimension codebook index that are of the information about the $(M+1)^{th}$-stage codebook.

Optionally, partial codebook information in information that is about the multi-stage codebook and that is reported by the terminal includes polarization phase information, and the polarization phase information is used to select a polarization phase. For example, the information that is about the first-stage codebook and that is reported by the terminal includes the polarization phase information; and/or information that is about a highest-stage codebook and that is reported by the terminal includes the polarization phase information.

The polarization phase information may be information independent of a codebook index in codebook information that includes the polarization phase information, or may be a part of a codebook index.

When the reported information about the first-stage codebook includes the polarization phase information, the polarization phase information is reported, as information independent of the first codebook index of the information about the first-stage codebook, together with the first codebook index, or is reported as a part of the first codebook index of the information about the first-stage codebook. Alternatively, the polarization phase information is reported, as information independent of the second codebook index of the information about the first-stage codebook, together with the second codebook index, or is reported as a part of the second codebook index of the information about the first-stage codebook.

A reporting location of the polarization phase information may be determined based on a bit allocation between the first codebook index and the second codebook index that are of the information about the first-stage codebook; or may be determined based on a bit allocation between a part, that is in the first codebook index of the information about the first-stage codebook and that is used to select a vector group, and a part that is in the second codebook index of the information about the first-stage codebook and that is used to select a precoding vector.

When the reported information about the highest-stage codebook includes the polarization phase information, the polarization phase information may be reported, as information independent of a second codebook index of the information about the highest-stage codebook, together with the second codebook index, or may be reported as a part of a second codebook index of the information about the highest-stage codebook.

Optionally, when precision of an $S^{th}$-stage codebook reaches preset precision, information that is about the $S^{th}$-stage codebook to an $N^{th}$-stage codebook and that is reported by the terminal includes the polarization phase information. S is a positive integer less than or equal to N, and N is the codebook stage quantity.

It can be learned that in the foregoing several manners of reporting the polarization phase, a quantity of times of reporting the polarization phase can be reduced, and reporting overheads are further reduced.

In the foregoing process in which the terminal performs reporting for the codebook information based on the configuration information, when the terminal reports the information about the first-stage codebook, the terminal determines precision of the first-stage codebook based on the configuration information, and reports information about a codebook with the precision of the first-stage codebook. When the terminal reports the information about the second-stage codebook and the higher-stage codebook, the terminal determines precision of a current-stage codebook based on the configuration information, determines a range of the current-stage codebook based on information about a previous-stage codebook, and reports, within the range of the current-stage codebook, information about a codebook with the precision of the current-stage codebook.

Optionally, the terminal stores association information between the information about the $M^{th}$-stage codebook and the range of the $(M+1)^{th}$-stage codebook. In this case, the process in which the terminal reports the code information based on the configuration information includes the following: The terminal reports the information about the first-stage codebook based on configuration information, where the configuration information is used to determine precision of the first-stage codebook; the terminal reports the information about the $(M+1)^{th}$-stage codebook based on configuration information, the information about the $M^{th}$-stage codebook, and the association information, where the configuration information is used to determine precision of the $(M+1)^{th}$-stage codebook, and the information about the $M^{th}$-stage codebook and the association information are used to determine the range of the $(M+1)^{th}$-stage codebook.

Optionally, the configuration information includes a codebook parameter, the codebook parameter includes a plurality of values or indication information of a plurality of values, and each value corresponds to one codebook precision. Alternatively, the configuration information includes a parameter field, the parameter field is used to indicate a value of a codebook parameter, the codebook parameter has a plurality of values, and each value corresponds to one codebook precision. Alternatively, the configuration information includes a first configuration message and a second configuration message, the first configuration message includes a plurality of values or indication information of a plurality of values of a codebook parameter, and the second configuration message is used to indicate a value selected from the plurality of values.

The codebook parameter may be a spacing factor that is used to represent an angle spacing (or an angle difference) between precoding vectors in a codebook or between spatial beams corresponding to precoding vectors. Alternatively, the codebook parameter may be an over-sampling factor that is used to represent a quantity of precoding vectors in a codebook or a quantity of spatial beams corresponding to precoding vectors.

The codebook parameter may be configured or sent by using higher layer signaling, physical layer signaling, or a combination of higher layer signaling and physical layer signaling. In this case, the configuration information may be higher layer signaling, or may be physical layer signaling, or may include higher layer signaling and physical layer signaling. For example, the first configuration message is higher layer signaling and the second configuration message is physical layer signaling.

The value of the codebook parameter may have a preset relationship with a subscript of the precoding matrix. In this way, the RAN node can determine the precoding matrix based on the preset relationship.

In the foregoing second aspect, the process in which the RAN node determines the precoding matrix based on the received information about a codebook may include the following:

When receiving the information about the first-stage codebook, the RAN node determines the precoding matrix based on the information about the first-stage codebook. For example, when the information about the first-stage codebook includes a first codebook index and a second codebook index, the RAN node determines the precoding matrix based on the first codebook index and the second codebook index. For another example, when the information about the first-stage codebook includes a second codebook index, the RAN node determines the precoding matrix by using a default value of a first codebook index and the received second codebook index.

When the RAN node receives the information about the second-stage codebook and the higher-stage codebook, the RAN node determines the precoding matrix based on information about a previous-stage codebook and information about a current-stage codebook. For example, when the information that is about the second-stage codebook and the higher-stage codebook and that is received by the RAN node includes a second codebook index, the RAN node determines a first codebook index of the information about the current-stage codebook based on a second codebook index of the information about the previous-stage codebook, and determines the precoding matrix based on the first codebook index and a second codebook index that are of the information about the current-stage codebook.

According to a third aspect, a communications apparatus is provided, applied to a terminal and including a unit or means (means) configured to perform the steps in the first aspect or any one of the optional manners of the first aspect.

According to a fourth aspect, a communications apparatus is provided, applied to a RAN node and including a unit or means (means) configured to perform the steps in the second aspect or any one of the optional manners of the second aspect.

According to a fifth aspect, a communications apparatus is provided, including a processor and a memory. The memory is configured to store a program. When the communications apparatus is located in a terminal, the processor invokes the program stored in the memory, to perform the method provided in the first aspect or any one of the optional manners of the first aspect; or when the communications apparatus is located in a RAN node, the processor invokes the program stored in the memory, to perform the method provided in the second aspect or any one of the optional manners of the second aspect.

According to a sixth aspect, a communications apparatus is provided, applied to a terminal and including at least one processing element or chip configured to perform the method in the first aspect or any one of the optional manners of the first aspect. Alternatively, a communications apparatus is provided, applied to a RAN node and including at least one processing element or chip configured to perform the method in the second aspect or any one of the optional manners of the second aspect.

According to a seventh aspect, a program is provided. When being executed by a processor, the program is configured to perform the method in the first aspect or any one of the optional manners of the first aspect, or is used to perform the method in the second aspect or any one of the optional manners of the second aspect.

According to an eighth aspect, a program product is provided, for example, a computer readable storage medium, including the program in the seventh aspect.

In the foregoing aspects, after reporting information about a current-stage codebook, the terminal may know a range of a next-stage codebook, and perform measurement and reporting within a corresponding range, thereby narrowing a range in which measurement and reporting are performed and reducing overheads of the terminal. After receiving information about a codebook, the RAN node may determine the precoding matrix based on information about a previous-stage codebook and the currently received information about the codebook, thereby reducing an overhead requirement of codebook information when the precoding matrix is determined at each stage.

## BRIEF DESCRIPTION OF DRAWINGS

FIG. 1 is a schematic diagram of a communication scenario according to an embodiment of this application;
FIG. 2 is a schematic diagram of existing codebook configuration;
FIG. 3 is a schematic diagram of several antenna arrays according to an embodiment of this application;
FIG. 4 is a schematic diagram of a communication method according to an embodiment of this application;
FIG. 5 is a schematic diagram of codebook configuration according to an embodiment of this application;
FIG. 6 is a schematic diagram of codebook information reporting according to an embodiment of this application;
FIG. 7 is a schematic diagram of an association relationship between an $M^{th}$-stage codebook index and an $(M+1)^{th}$-stage codebook index according to an embodiment of this application;
FIG. 8 is a schematic diagram of a plurality of types of bandwidths according to an embodiment of this application;
FIG. 9 is a schematic diagram of a communications apparatus according to an embodiment of this application;
FIG. 10 is a schematic diagram of a terminal according to an embodiment of this application;
FIG. 11 is a schematic diagram of another communications apparatus according to an embodiment of this application; and
FIG. 12 is a schematic diagram of a RAN node according to an embodiment of this application.

## DESCRIPTION OF EMBODIMENTS

Some terms in this application are described below, to help persons skilled in the art have a better understanding.

(1) A terminal is also referred to as user equipment (User Equipment, UE) or mobile equipment (mobile equipment, ME), and is a device that provides voice and/or data connectivity for a user, for example, a handheld device with a wireless connection function or an in-vehicle device with a wireless connection function. Common terminals, for example, include a mobile phone, a tablet computer, a notebook computer, a palmtop computer, a mobile Internet device (mobile internet device, MID), or a wearable device such as a smartwatch, a smart band, or a pedometer.
(2) A radio access network (Radio Access Network, RAN) is a part that is of a network and that connects the terminal to a wireless network. A RAN node or device is a node or device that is in the RAN and that connects the terminal to the wireless network, and includes but is not limited to a transmission reception point (Transmission Reception Point, TRP), an evolved NodeB (evolved Node B, eNB), a radio network controller (radio network controller, RNC), a NodeB (Node B, NB), a base station controller (Base Station Controller, BSC), a base transceiver station (Base Transceiver Station, BTS), a home eNodeB (such as a home evolved NodeB or a home NodeB, HNB), a baseband unit (Baseband Unit, BBU), a Wi-Fi access point (Access Point, AP), or the like.

(3) "A plurality of" means two or more than two, and other quantifiers are similar to this. The term "and/or" describes an association relationship for describing associated objects and indicates that three relationships may exist. For example, A and/or B may represent the following three cases: Only A exists, both A and B exist, and only B exists. The character "/" usually indicates an "or" relationship between the associated objects.

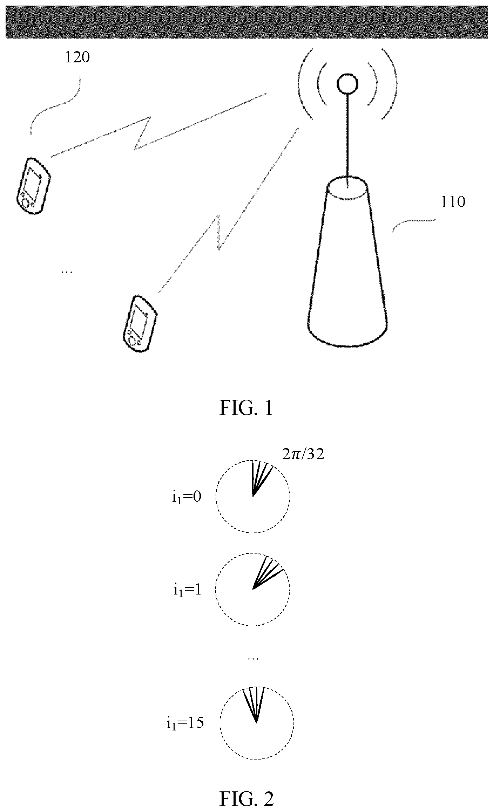

FIG. 1 is a schematic diagram of a communication scenario according to an embodiment of this application. As shown in FIG. 1, a terminal 120 accesses a wireless network through a RAN node 110, to obtain a service of an external network (such as the Internet) through the wireless network, or to communicate with another terminal through the wireless network.

Currently, the RAN node 110 may send a reference signal to the terminal 120. The terminal 120 performs channel estimation based on the reference signal to obtain channel information such as channel state information (Channel State Information, CSI), and reports the channel information to the RAN node. The RAN node 110 performs downlink scheduling and transmits data, based on the channel information reported by the terminal 120.

The CSI may include a channel quality indicator (Channel Quality Indicator, CQI), a precoding matrix indication (Precoding Matrix Indication, PMI), and a rank indication (Rank Indication, RI). For each rank (rank), a specific quantity of precoding matrices may be designed to represent a quantized channel, and the precoding matrices form a codebook. The PMI may be used to indicate a precoding matrix in the codebook.

The PMI is signaling reported by the terminal. The signaling includes a codebook index. The RAN node determines, based on the codebook index in the PMI, a precoding matrix corresponding to the PMI. Currently, PMI reporting includes: reporting based on a single codebook structure and reporting based on a double codebook structure. In the single codebook structure, the PMI corresponds to one codebook index (codebook index); that is, the PMI includes one codebook index.

In the double codebook structure, the PMI may correspond to a pair of codebook indices (a pair of codebook indices), or may correspond to three codebook indices (three codebook indices); that is, the PMI includes two or three codebook indices. When the PMI includes two codebook indices, the two codebook indices may be respectively referred to as a first sub-PMI and a second sub-PMI in terms of signaling. When the PMI includes three codebook indices, the three codebook indices include a first-stage vertical-dimension codebook index and a first-stage horizontal-dimension codebook index that are referred to as a first sub-PMI in terms of signaling, and further include a second-stage codebook index that is referred to as a second sub-PMI in terms of signaling. Codebook indices of the first sub-PMI may be used to determine a matrix W1 that reflects a long-term or wideband channel feature. A codebook index of the second sub-PMI may be used to determine a matrix W2 that reflects a short-term or narrowband channel feature. In addition, a precoding matrix W corresponding to the PMI is obtained by multiplying W1 and W2, that is, W=W1*W2 or W=W2*W1.

Currently, in the double codebook structure, the matrix W may be obtained by using codebook indices reported through two-stage PMI. For example, when the PMI includes two codebook indices, the two codebook indices are respectively denoted as $i_1$ and $i_2$. A codebook includes 32 precoding vectors (which may also be referred to as vectors), and each precoding vector corresponds to one spatial beam. An angle spacing between the precoding vectors is $2\pi/32$. The 32 precoding vectors are grouped into 16 vector groups, and each vector group includes four precoding vectors and corresponds to one W1. Herein, the 32 precoding vectors are grouped in a manner in which two overlapping precoding vectors exist in two adjacent vector groups.

$i_1$ occupies 4 bits and is used to represent the 16 vector groups. Each vector group corresponds to one $i_1$, that is, each $i_1$ corresponds to one W1. FIG. 2 shows the 16 vector groups. When $i_1=0$, W1 corresponds to a vector group in a first circle in FIG. 2, and the vector group includes four precoding vectors shown in the first circle. When $i_1=1$, W1 corresponds to a vector group in a second circle in FIG. 2, and the vector group includes four precoding vectors shown in the second circle. Descriptions of other values of ii are similar to this, and details are not described herein. $i_2$ occupies 4 bits, where 2 bits in the 4 bits are used to select a precoding vector from the vector group corresponding to W1. A quantity of selected precoding vectors is related to the RI. For example, when RI=1, one precoding vector is selected; or when RI=2, two precoding vectors are selected. The two other bits are used to determine a polarization phase (referred to as Co-phasing), and the polarization phase is used to describe a phase difference between two polarization directions.

With reference to Table 1 and Table 2, an example of CSI reporting in case of RI=1 (namely, 1-layer) is used below, to describe a current obtaining status of the precoding matrix W.

**Table 1: Codebook for 1-layer CSI reporting using antenna ports 0 to 3 or 15 to 18 (Codebook for 1-layer CSI reporting using antenna ports 0 to 3 or 15 to 18)**

| $i_1$ | $i_2$ | | | | | | | |
|---|---|---|---|---|---|---|---|---|
| | **0** | **1** | **2** | **3** | **4** | **5** | **6** | **7** |
| 0 - 15 | $W_{i_1,0}^{(1)}$ | $W_{i_1,8}^{(1)}$ | $W_{i_1,16}^{(1)}$ | $W_{i_1,24}^{(1)}$ | $W_{i_1+8,2}^{(1)}$ | $W_{i_1+8,10}^{(1)}$ | $W_{i_1+8,18}^{(1)}$ | $W_{i_1+8,26}^{(1)}$ |
| $i_1$ | $i_2$ | | | | | | | |
| | **8** | **9** | **10** | **11** | **12** | **13** | **14** | **15** |
| 0 - 15 | $W_{i_1+16,4}^{(1)}$ | $W_{i_1+16,12}^{(1)}$ | $W_{i_1+16,20}^{(1)}$ | $W_{i_1+16,28}^{(1)}$ | $W_{i_1+24,6}^{(1)}$ | $W_{i_1+24,14}^{(1)}$ | $W_{i_1+24,22}^{(1)}$ | $W_{i_1+24,30}^{(1)}$ |
| where $\quad W_{m,n}^{(1)} = \dfrac{1}{2}\begin{bmatrix} v'_m \\ \varphi'_n v'_m \end{bmatrix}$ | | | | | | | | |

Table 1 provides an example of 4T and RI=1. In this embodiment and the following embodiments, T represents an antenna port, where 4T means four antenna ports and 8T means eight antenna ports. In the table, the precoding matrix W is denoted as $W_{m,n}^{(1)}$. The PMI reported by the terminal includes codebook indices $i_1$ and $i_2$, and the RAN node may determine the precoding matrix $W_{m,n}^{(1)}$ based on the codebook indices $i_1$ and $i_2$ by using the foregoing table. Specifically, values of m and n may be determined based on the foregoing table and the codebook indices $i_1$ and $i_2$, and $v'_m$ and $\varphi'_n$ may be further determined based on the values of m and n, where $v'_m$ represents the precoding vector selected from the vector group corresponding to W1, and $\varphi'_n$ represents the polarization phase. In this way, the precoding matrix $W_{m,n}^{(1)}$ can be determined.

**Table 2: Codebook for 1-layer CSI reporting using antenna ports 15 to 22 (Codebook for 1-layer CSI reporting using antenna ports 15 to 22)**

| $i_1$ | $i_2$ | | | | | | | |
|---|---|---|---|---|---|---|---|---|
| | **0** | **1** | **2** | **3** | **4** | **5** | **6** | **7** |
| 0 - 15 | $W_{2i_1,0}^{(1)}$ | $W_{2i_1,1}^{(1)}$ | $W_{2i_1,2}^{(1)}$ | $W_{2i_1,3}^{(1)}$ | $W_{2i_1+1,0}^{(1)}$ | $W_{2i_1+1,1}^{(1)}$ | $W_{2i_1+1,2}^{(1)}$ | $W_{2i_1+1,3}^{(1)}$ |
| $i_1$ | $i_2$ | | | | | | | |
| | **8** | **9** | **10** | **11** | **12** | **13** | **14** | **15** |
| 0 - 15 | $W_{2i_1+2,0}^{(1)}$ | $W_{2i_1+2,1}^{(1)}$ | $W_{2i_1+2,2}^{(1)}$ | $W_{2i_1+2,3}^{(1)}$ | $W_{2i_1+3,0}^{(1)}$ | $W_{2i_1+3,1}^{(1)}$ | $W_{2i_1+3,2}^{(1)}$ | $W_{2i_1+3,3}^{(1)}$ |
| where $\quad W_{m,n}^{(1)} = \dfrac{1}{\sqrt{8}}\begin{bmatrix} v_m \\ \varphi_n v_m \end{bmatrix}$ | | | | | | | | |

The table provides an example of 8T and RI=1. In the table, the precoding matrix W is denoted as $W_{m,n}^{(1)}$. The PMI reported by the terminal includes codebook indices $i_1$ and $i_2$, and the RAN node may determine the precoding matrix $W_{m,n}^{(1)}$ based on the codebook indices $i_1$ and $i_2$ by using the foregoing table. Specifically, values of m and n may be determined based on the foregoing table and the codebook indices $i_1$ and $i_2$, and $v_m$ and $\varphi_n$ may be further determined based on the values of m and n, where $v_m$ represents the precoding vector selected from the vector group corresponding to W1, and $\varphi_n$ represents the polarization phase. In this way, the precoding matrix $W_{m,n}^{(1)}$ can be determined.

The foregoing uses 1-layer CSI reporting as an example. An example of CSI reporting of more than one layer is not described in detail herein.

It can be learned that, in a two-stage codebook structure in which the PMI includes two codebook indices, codebook precision, namely, $2\pi/32$ is determined, and the structure cannot meet different precision requirements of different environments. In addition, when the precision needs to be increased, a quantity of bits occupied by the codebook index needs to be increased, and overheads of one-time reporting are relatively large. For example, during aperiodic reporting, two codebook indices need to be reported each time, and this requires a relatively large quantity of bit overheads.

In a full-dimension MIMO (Full Dimension MIMO, FD-MIMO) technology, a scale of an antenna array is increased, and the PMI includes three codebook indices, namely, the first-stage vertical-dimension codebook index, the first-stage horizontal-dimension codebook index, and the second-stage codebook index. In this case, the RAN node may configure codebook-related parameters for the terminal, including $N_1$, $N_2$, $O_1$, $O_2$, and codebook configuration (Codebook-Config). Specifically, the RAN node may configure the parameters for the terminal in a CSI process by using radio resource control (Radio Resource Control, RRC) signaling. Meanings of the parameters are as follows:

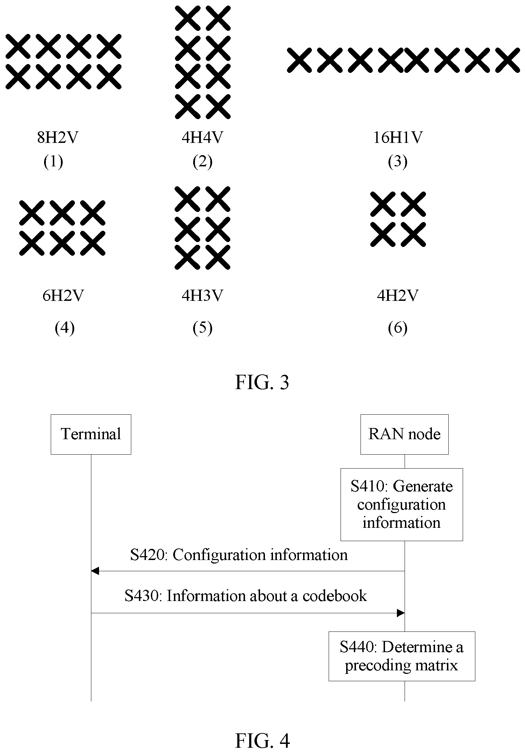

$N_1$ and $N_2$ respectively represent a quantity of elements of the antenna array in one polarization direction in a horizontal dimension and a quantity of elements of the antenna array in one polarization direction in a vertical dimension. For example, FIG. 3 is a schematic diagram of several antenna arrays. In a 4*2 array antenna shown in (1) in FIG. 3, $N_1$ is 4 and $N_2$ is 2. In a 2*4 array antenna shown in (2) in FIG. 3, $N_1$ is 2 and $N_2$ is 4. In an 8*1 array antenna shown in (3) in FIG. 3, $N_1$ is 8 and $N_2$ is 1. In a 3*2 array antenna shown in (4) in FIG. 3, $N_1$ is 3 and $N_2$ is 2. In a 2*3 array antenna shown in (5) in FIG. 3, $N_1$ is 2 and $N_2$ is 3. In a 2*2 array antenna shown in (6) in FIG. 3, $N_1$ is 2 and $N_2$ is 2. In the figure, xHyV means that there are x antenna ports in a horizontal domain (including two polarization directions) and y co-polarization antenna ports in a vertical domain (xHyV means there are x antenna ports in horizontal domain including 2 polarization directions, and y co-pol antenna ports in vertical domain).

O1 and O2 respectively represent a horizontal-dimension over-sampling factor and a vertical-dimension over-sampling factor. Codebook precision depends on the parameter. A larger configured value indicates higher codebook precision, a smaller angle spacing between precoding vectors in the matrix W1, and a larger total quantity of precoding vectors.

Table 3 below provides several types of configuration of $(O_1, O_2)$ and $(N_1, N_2)$.

**Table 3: Configuration of $(O_1, O_2)$ and $(N_1, N_2)$**

| Number of CSI-RS antenna ports (Number of CSI-RS antenna ports), P | $(N_1,N_2)$ | $(O_1,O_2)$ |
|---|---|---|
| 8 | (2,2) | (4, 4), (8, 8) |
| 12 | (2, 3) | (8, 4), (8, 8) |
| 12 | (3, 2) | (8, 4), (4, 4) |
| 16 | (2, 4) | (8, 4), (8, 8) |
| 16 | (4, 2) | (8, 4), (4, 4) |
| 16 | (8, 1) | (4, -), (8, -) |

Codebook-Config is used to indicate which horizontal-direction and vertical-direction precoding vectors are included in the matrix W1. When there are more than four horizontal-direction and vertical-direction precoding vectors, configuring the parameter may enable a quantity of precoding vectors in the matrix W1 not to exceed 4, so that reporting overheads of the terminal can be reduced. The parameter may be configured as 1 to 4, and each value corresponds to one codebook table. Table 4 below provides a codebook that is used for 1-layer CSI reporting and that exists when a value of Codebook-Config is 1.

**Table 4: Codebook for 1-layer CSI reporting using antenna ports 15 to 14+P (Codebook for 1-layer CSI reporting using antenna ports 15 to 14+P)**

| Value of Codebook-Config (Value of Codebook-Config) | $i_{1,1}$ | $i_{1,2}$ | $i_2$ | | | |
|---|---|---|---|---|---|---|
| | | | 0 | 1 | 2 | 3 |
| 1 | $0,1,\cdots,$ $O_1N_1-1$ | $0,1,\cdots,$ $O_2N_2-1$ | $W^{(1)}_{i_{1,1},i_{1,2},0}$ | $W^{(1)}_{i_{1,1},i_{1,2},1}$ | $W^{(1)}_{i_{1,1},i_{1,2},2}$ | $W^{(1)}_{i_{1,1},i_{1,2},3}$ |

(continued)

| Value of Codebook-Config (Value of Codebook-Config) | $i_{1,1}$ | $i_{1,2}$ | $i_2$ | | | |
|---|---|---|---|---|---|---|
| | | | 0 | 1 | 2 | 3 |
| where | | | $$W_{l,m,n}^{(1)} = \frac{1}{\sqrt{P}} \begin{bmatrix} v_{l,m} \\ \varphi_n v_{l,m} \end{bmatrix}$$ | | | |

In the table, the precoding matrix W is denoted as $W_{l,m,n}^{(1)}$. The PMI reported by the terminal includes codebook indices $i_{1,1}$, $i_{1,2}$, and $i_2$, where the first sub-PMI includes $i_{1,1}$ and $i_{1,2}$ and the second sub-PMI includes $i_2$, the RAN node may determine the precoding matrix $W_{l,m,n}^{(1)}$ based on the codebook indices $i_{1,1}$, $i_{1,2}$, and $i_2$ by using the foregoing table. Specifically, values of 1, m, and n may be determined based on the foregoing table and the codebook indices $i_{1,1}$, $i_{1,2}$, and $i_2$, and $v_{l,m}$ and $\varphi_n$ may be further determined based on the values of l, m, and n, where $v_{l,m}$ represents the precoding vector selected from the vector group corresponding to W1, and $\varphi_n$ represents the polarization phase. In this way, $W_{l,m,n}^{(1)}$ can be determined.

The foregoing uses 1-layer CSI reporting as an example in which the value of Codebook-Config is 1. An example in which Codebook-Config has another value and an example of CSI reporting of more than one layer are not described in detail herein.

It can be learned that, in a two-stage codebook structure in which the PMI includes three codebook indices, the codebook precision is statically configured and is relatively fixed, and the structure cannot meet different precision requirements of different environments. For example, for the 2*3 antenna array in the foregoing Table 3, only a codebook with an over-sampling factor (8, 4) or (8, 8) is configured. The structure cannot meet a codebook requirement for higher or lower precision. In addition, if the codebook precision needs to be increased, a quantity of bits occupied by the codebook index needs to be increased, and overheads of one-time reporting are relatively large. For example, during aperiodic reporting, three codebook indices need to be reported each time, and this requires a relatively large quantity of bit overheads.

Considering the foregoing problem, embodiments of this application provide a multi-precision codebook solution. In this solution, the RAN node may configure precision of a multi-stage codebook for the terminal. The configuration enables codebook precision at different stages to be different. Compared with a prior-art manner in which the codebook precision is fixedly configured, a more flexible codebook may be obtained in this manner. In addition, an association relationship between codebooks at two adjacent stages is set, that is, information about a previous-stage codebook limits a range of a current-stage codebook or information about a current-stage codebook limits a range of a next-stage codebook. In this way, the terminal can perform codebook measurement and reporting within a specific range, thereby reducing reporting overheads.

FIG. 4 is a schematic diagram of a communication method according to an embodiment of this application. The method is used for codebook information reporting, for example, PMI reporting. As shown in FIG. 4, the method includes the following steps:

S410: A RAN node generates configuration information, where the configuration information is used to configure precision of a multi-stage (stage) codebook, and codebook precision at different stages is different.

S420: The RAN node sends the generated configuration information to a terminal, and the terminal performs the following operation after receiving the configuration information sent by the RAN node.

S430: The terminal performs reporting for codebook information based on the configuration information, where information about an Mth-stage codebook limits a range of an (M+1)th-stage codebook, and M is a positive integer and is less than a codebook stage quantity.

S440: The RAN node receives information that is about a codebook and reported by the terminal, and determines a precoding matrix based on the received information about the codebook.

In this embodiment of this application, the precision of a codebook may also be referred to as codebook precision or codebook resolution, and is used to reflect an angle spacing (or an angle difference) between precoding vectors in a codebook, or is used to reflect an angle spacing (or an angle difference) between spatial beams corresponding to precoding vectors. Alternatively, the codebook precision is used to reflect a width of a space-domain directivity pattern of a precoding vector in a codebook, for example, angle spread. Higher codebook precision indicates a smaller angle spacing between the precoding vectors. The information about a codebook is also referred to as codebook information, may be referred to as a PMI in terms of signaling, and may include a codebook index.

In the foregoing embodiment, after reporting information about a current-stage codebook, the terminal may know a range of a next-stage codebook, and perform measurement and reporting within a corresponding range, thereby narrowing a range in which measurement and reporting are performed and reducing overheads of the terminal. After receiving information about a codebook, the RAN node may determine the precoding matrix based on information about a previous-stage codebook and the currently received information about the codebook, thereby reducing an overhead requirement of codebook information when the precoding matrix is determined at each stage.

In the foregoing method, the codebook precision may be flexibly changed instead of fixedly configured. In this way, the RAN node can flexibly adjust codebook precision configured for the terminal. For example, for a cell edge terminal and a cell center terminal, the cell center terminal requires higher codebook precision, and the cell edge terminal requires lower codebook precision. In this way, the codebook precision can be adjusted based on a signal-to-noise ratio. In addition, compared with a codebook with fixed high precision, overall reporting overheads can be reduced, and the method can flexibly adapt to a plurality of scenarios.

The codebook information includes a codebook index (codebook index). For example, information about a codebook at each stage includes a first codebook index and a second codebook index. The first codebook index is represented by $i_1$, and is related to a long-term or wideband channel feature, that is to say, $i_1$ is used to select a vector group, and the vector group includes a plurality of precoding vectors that reflect the long-term or wideband channel feature. The second codebook index is represented by $i_2$, and is related to a short-term or narrowband channel feature, that is to say, $i_2$ is used to select a precoding vector, and the precoding vector reflects the short-term or narrowband channel feature. Starting at a second stage, a range of a codebook is limited by information about a previous-stage codebook. Therefore, starting at the second stage, the terminal may no longer report the first codebook index, that is, reported information about a codebook may include only the second codebook index. Therefore, reported information about a first-stage codebook includes a first codebook index and a second codebook index, and reported information about a second-stage codebook and a higher-stage codebook includes a second codebook index.

For example, the reported information about the first-stage codebook includes $i_1$ and $i_2$, where $i_2$ of the information about the first-stage codebook is used to select a precoding vector from a vector group corresponding to $i_1$, and $i_2$ of the information about the first-stage codebook limits a range of the second-stage codebook, namely, a value of $i_1$ of the information about the second-stage codebook. The range includes a vector group, and $i_2$ of the information about the second-stage codebook is used to select a precoding vector from the vector group. By analogy, $i_2$ of the information about the $M^{th}$-stage codebook (other than the first-stage codebook) limits the range of the $(M+1)^{th}$-stage codebook, namely, a value of $i_1$ of information about the $(M+1)^{th}$-stage codebook. The range includes a vector group, and $i_2$ of the information about the $(M+1)^{th}$-stage codebook is used to select a precoding vector from the vector group.

It should be noted that, an example in which $i_2$ of the information about the $M^{th}$-stage codebook limits the range of the $(M+1)^{th}$-stage codebook is used for description in the foregoing embodiment. In addition, $i_1$ and $i_2$ of the information about the $M^{th}$-stage codebook may be used to limit the range of the $(M+1)^{th}$-stage codebook.

Compared with the prior art, starting at the second stage, $i_1$ does not need to be reported in the foregoing embodiment. In this way, reporting overheads can be reduced. Particularly, in case of aperiodic PMI reporting, a large quantity of reporting overheads can be reduced. In addition, multi-stage codebook precision can be obtained. This is applicable to different application scenarios, and the codebook precision is more flexible.

The following uses 8T and RI=1 as an example to describe an implementation of the multi-stage codebook precision. This is only an example, and is not used to limit this application.

Table 5 shows configuration of four-stage codebook precision. In this example, the codebook precision is gradually increased in an order of stages 1 to 4. In a codebook with precision at each stage, a precoding matrix is compatible with an existing double codebook structure, that is, the precoding matrix W is obtained by multiplying W1 and W2, that is, W=W1*W2 or W=W2*W1. W1 reflects a long-term or wideband channel feature, and includes a plurality of precoding vectors (which are referred to as vectors in the table). There are four precoding vectors in this embodiment. W2 reflects a short-term or narrowband channel feature, and is used to select a precoding vector from W1 and a polarization phase.

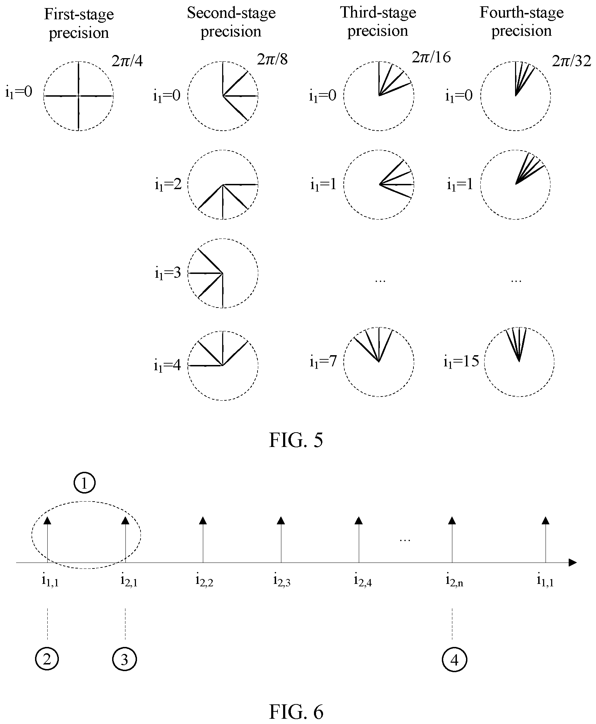

In the prior art, in case of 8T and RI=1, there is only the last row, namely, fourth-stage codebook precision. However, in this embodiment of this application, there is four-stage codebook precision. FIG. 5 is a schematic diagram of codebook configuration according to an embodiment of this application. As shown in Table 5 and FIG. 5, for first-stage codebook precision, a total quantity of W1 is 1, that is, there is one vector group. In this case, a value of $i_1$ only needs to reflect the quantity 1, for example, $i_1=0$. Therefore, for the first-stage codebook precision, $i_1$ only needs to occupy 1 bit. For second-stage codebook precision, a total quantity of W1 is 4, that is, there are four vector groups. In this case, a value of $i_1$ only needs to reflect the quantity 4, for example, $i_1=0$ to 3. Therefore, for the second-stage codebook precision, $i_1$ only needs to occupy 2 bits. For third-stage codebook precision, a total quantity of W1 is 8, that is, there are eight vector groups. In this case, a value of $i_1$ only needs to reflect the quantity 8, for example, $i_1=0$ to 7.

Therefore, for the third-stage codebook precision, $i_1$ only needs to occupy 3 bits. For the fourth-stage codebook precision, a total quantity of W1 is 16, that is, there are sixteen vector groups. In this case, a value of $i_1$ only needs to reflect the quantity 16, for example, $i_1=0$ to 15. Therefore, for the fourth-stage codebook precision, $i_1$ only needs to occupy 4 bits. W2 is used to select a vector from a vector group corresponding to W1 indicated by $i_1$, and is used to select a polarization phase. Similar to the prior art, the two parts each may be selected by using 2 bits. Certainly, as the technology evolves, more or fewer bits may be used. No limitation is imposed herein. In an implementation, a part used to select a polarization phase may not need to be reported each time, to reduce reporting overheads. This is described in subsequent embodiments.

**Table 5**

| Codebook precision stage | Total quantity of W1 (value of i1) | Angle spacing between vectors in W1 | Quantity of vectors in W1 | Quantity of bits in W2 that are used to select a vector | Quantity of bits in W2 that are used to select a polarization phase |
|---|---|---|---|---|---|
| 1 | 1 | $2\pi/4$ | 4 | 2 | 2 |
| 2 | 4 | $2\pi/8$ | 4 | 2 | 2 |
| 3 | 8 | $2\pi/16$ | 4 | 2 | 2 |
| 4 | 16 | $2\pi/32$ | 4 | 2 | 2 |

With reference to FIG. 6, the following compares reporting overheads in the foregoing embodiment with reporting overheads in an existing 8T case. FIG. 6 is a schematic diagram of codebook information reporting according to an embodiment of this application.

As shown in FIG. 6, $i_{1,M}$ represents $i_1$ of the information about the $M^{th}$-stage codebook, and $i_{2,M}$ represents $i_2$ of the information about the $M^{th}$-stage codebook. There are N stages in total, and different stages correspond to different codebook precision.

In the prior art, a reported first sub-PMI, namely $i_1$, is equivalent to $i_1$ at the fourth stage in this embodiment, has 16 values in total, and requires 4 bits. In this embodiment, there is only one W1 in a first-stage codebook. Therefore, $i_1$ at the first stage has only one value, and may occupy only 1 bit or may not be reported. Therefore, in the foregoing embodiment, information that is about the first-stage codebook and that is reported by the terminal may not include the first codebook index, and includes only the second codebook index. Regardless of whether $i_1$ at the first stage is reported, in the foregoing method, reporting overheads of $i_1$ are reduced in a scenario in which there is a relatively low codebook precision requirement, $i_2$ at the first stage is reported to select a precoding vector from a vector group corresponding to W1 indicated by $i_1$ at the first stage. In addition, $i_2$ reported at the first stage limits a value of $i_1$ at the second stage, that is, limits a range of a second-stage codebook. Therefore, only $i_2$ needs to be reported at the second stage, and $i_1$ does not need to be reported. $i_2$ reported at the second stage limits a value of ii at the third stage, that is, limits a range of a third-stage codebook. Therefore, only $i_2$ needs to be reported at the third stage, and $i_1$ does not need to be reported. By analogy, only $i_2$ needs to be reported subsequently, and $i_1$ does not need to be reported. In this way, a large quantity of overheads can be reduced, particularly in case of aperiodic reporting. Herein, an example in which $i_2$ limits a value of $i_1$ at a next stage is used for description. Certainly, $i_1$ and $i_2$ may jointly limit the value. No limitation is imposed herein.

Further, in the prior art, $i_2$ is used to select a precoding vector and a polarization phase, that is, includes a part used to select a vector and a part used to select a polarization phase. In an embodiment of this application, information used to select a polarization phase may be reported only in partial codebook information, or may be reported independently. Compared with a prior-art manner in which $i_2$ reported each time includes the part used to select a polarization phase, reporting overheads can be reduced.

For example, referring to FIG. 6 again, several reporting locations of polarization phase information are shown. The locations are only several location examples, and are not used to limit all reporting locations. The polarization phase information herein is the information used to select a polarization phase, and may exist independently of a codebook index in codebook information, or may be used as a part of a codebook index. In this case, the codebook index includes the part used to select a polarization phase and the part used to select a precoding vector or a vector group.

In the figure, ① indicates that in process of reporting the information about the first-stage (lowest codebook precision stage) codebook, $i_1$ and $i_2$ may be reported together, or may be separately reported. In addition, only $i_2$ may be reported. An advantage of reporting $i_1$ and $i_2$ together is that the RAN node can determine the precoding matrix based on information about a codebook reported for the first time. An advantage of separately reporting $i_1$ and $i_2$ is that overheads of one-time reporting can be reduced in a bit-limited case, for example, reporting is performed on a physical uplink control channel (Physical Uplink Control Channel, PUCCH).

In the figure, ② to ④ respectively indicate three possible reporting locations of the polarization phase information.

When the polarization phase information is reported at the location ②, the polarization phase information may be reported together with $i_{1,1}$ as information independent of $i_{1,1}$, or may be reported as a part of $i_{1,1}$. In this case, $i_{1,1}$ includes the part used to select a vector group and the part used to select a polarization phase. When the polarization phase information is reported at the location ③, the polarization phase information may be reported together with $i_{2,1}$ as information independent of $i_{2,1}$, or may be reported as a part of $i_{2,1}$. In this case, $i_{2,1}$ includes the part used to select a precoding vector and the part used to select a polarization phase. When the polarization phase information is reported at the location ④, it indicates that the polarization phase information is reported at a last stage (highest codebook precision stage). The polarization phase information may be reported together with $i_{2,n}$ as information independent of $i_{2,n}$, or may be reported as a part of $i_{2,n}$. In this case, $i_{2,n}$ includes the part used to select a precoding vector and the part used to select a polarization phase.

When the polarization phase information is reported at the first stage, for example, at the location ② or ③, the RAN node can determine a value of the polarization phase earlier, and determine the precoding matrix by using the polarization phase. Whether the polarization phase information is reported at the location ② or ③ may be determined based on a bit allocation between the first codebook index $i_1$ and the second codebook index $i_2$. If $i_1$ occupies a smaller quantity of bits or the part that is in $i_1$ and that is used to select a vector group occupies a smaller quantity of bits, the polarization phase information may be reported at the location ②. If $i_2$ occupies a smaller quantity of bits or the part that is in $i_2$ and that is used to select a precoding vector occupies a smaller quantity of bits, the polarization phase information may be reported at the location ③. In this way, limited reporting resources can be better used, for example, reporting is performed on the PUCCH in the bit-limited case.

When the polarization phase information is reported at the last stage, for example, at the location ④, because highest precision exists at the last stage, compared with a case in which reporting is performed at a location prior to the location ④, a corresponding measured polarization phase can describe a channel more accurately. In this case, before receiving the polarization phase information, the RAN node may determine the precoding matrix by using a default or preset polarization phase.

In an embodiment, the locations ② and ④ may be combined to jointly report the polarization phase information, or the locations ③ and ④ may be combined to jointly report the polarization phase information.

In addition, the terminal may add the polarization phase information into information about a codebook reported at any stage. In this case, the terminal only needs to indicate, by using signaling, that currently reported information about a codebook carries the polarization phase information.

Furthermore, the terminal may report the polarization phase information of information about a codebook at last several stages. For example, when precision of an $S^{th}$-stage codebook reaches preset precision, the terminal starts to report the polarization phase information, that is, information that is about the $S^{th}$-stage codebook to an $N^{th}$-stage codebook and that is reported by the terminal includes the polarization phase information. S is a positive integer less than or equal to N.

In this embodiment, reporting overheads can be further reduced by reducing a quantity of times of reporting the polarization phase.

A manner in which the information about the $M^{th}$-stage codebook limits the range of the $(M+1)^{th}$-stage codebook may be implemented by storing, in the terminal, association information between the information about the $M^{th}$-stage codebook and the range of the $(M+1)^{th}$-stage codebook. The association information is used to limit the range of the $(M+1)^{th}$-stage codebook by using the information about the $M^{th}$-stage codebook.

In this case, the process in which the terminal performs reporting for the codebook information based on the configuration information includes the following:

The terminal reports the information about the first-stage codebook based on configuration information, where the configuration information is used to determine precision of the first-stage codebook; and

the terminal reports the information about the $(M+1)^{th}$-stage codebook based on configuration information, the information about the $M^{th}$-stage codebook, and the association information, where the configuration information is used to determine precision of the $(M+1)^{th}$-stage codebook, and the information about the $M^{th}$-stage codebook and the association information are used to determine the range of the $(M+1)^{th}$-stage codebook.

A form of the association information is not limited in this application. For example, an association relationship between the information about the $M^{th}$-stage codebook and the range of the $(M+1)^{th}$-stage codebook may be set by using a table. Alternatively, an association relationship between the information about the $M^{th}$-stage codebook and the range of the $(M+1)^{th}$-stage codebook may be set by using a formula. Alternatively, an association relationship between the information about the $M^{th}$-stage codebook and the range of the $(M+1)^{th}$-stage codebook may be set by using code or the like.

For example, $i_1$ at the $(M+1)^{th}$ stage is $i_{1,M+1}=f(i_2, M)$, where f is a function that is used to infer $i_1$ at the $(M+1)^{th}$ stage by using $i_2$ at the $M^{th}$ stage. Alternatively, $i_1$ at the $M^{th}$ stage is $i_{1,M}=f(i_2, M-1)$, where f is a function that is used to infer $i_1$ at the $M^{th}$ stage by using $i_2$ at an $(M-1)^{th}$ stage.

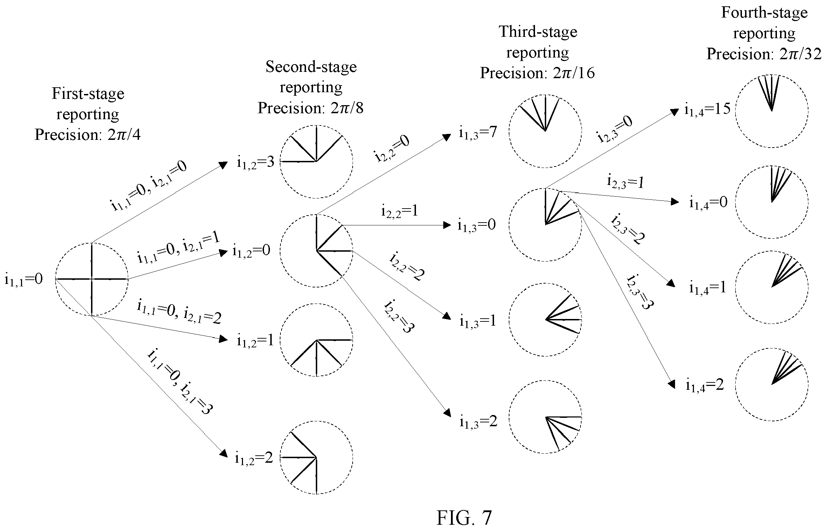

FIG. 7 is a schematic diagram of an association relationship between an $M^{th}$-stage codebook index and an (M+1)$^{th}$-stage codebook index according to an embodiment of this application. The association relationship described in the figure is only an example, and is not used to limit this application.

As shown in FIG. 7, codebook indices reported at a first stage include $i_{1,1}$ and $i_{2,1}$, and codebook indices reported at a second stage to a fourth stage include $i_{2,2}$ to $i_{2,4}$. The codebook indices $i_{1,1}$ and $i_{2,1}$ reported at the first stage limit a range of a second-stage codebook, that is, limit a range of $i_{1,2}$ at the second stage. Because a same $i_{1,1}$ is used to limit different ranges of $i_{1,2}$, the range of $i_{1,2}$ may be limited only by using $i_{2,1}$. For example, $i_{2,1}=1$ reported at the first stage in the figure limits the range of $i_{1,2}$ at the second stage to $i_{1,2}=0$, namely, a vector group formed by four precoding vectors existing when $i_{1,2}=0$ at the second stage in the figure; $i_{2,2}=1$ reported at the second stage in the figure limits a range of $i_{1,3}$ at the third stage to $i_{1,3}=0$, namely, a vector group formed by four precoding vectors existing when $i_{1,3}=0$ at the third stage in the figure; and $i_{2,3}=0$ reported at the third stage in the figure limits a range of $i_{1,4}$ at the fourth stage to $i_{1,4}=15$, namely, a vector group formed by four precoding vectors existing when $i_{1,4}=15$ at the fourth stage in the figure. Another correspondence is similar to this, and details are not described herein.

In the foregoing multi-stage codebook structure, a flexible codebook with different precision can be configured. In addition, reporting at each stage may enable the RAN node to obtain a precoding matrix that can be used currently, and there is no need to wait to use the precoding matrix until reporting at all the stages is completed.

In the foregoing steps S410 and S420, the RAN node configures the precision of the multi-stage codebook for the terminal. The following describes several examples in which the RAN node configures the precision of the multi-stage codebook.

In an example, the RAN node may configure a codebook parameter. The codebook parameter has a plurality of values, and each value corresponds to one codebook precision. For example, the codebook parameter may be a spacing factor, and may also be referred to as an inter-group spacing factor, a codebook spacing factor, or a codebook W1 spacing factor. The spacing factor is used to physically represent an angle spacing (or an angle difference) between precoding vectors in a codebook or between spatial beams corresponding to precoding vectors. In addition, the codebook parameter may be an over-sampling factor. The over-sampling factor is used to physically represent a sampling granularity of a precoding vector in a codebook or of a spatial beam corresponding to a precoding vector. The sampling granularity is associated with a quantity of pieces of space divided by the precoding vector or the spatial beam corresponding to the precoding vector. For example, the over-sampling factor is O, and a total quantity of W1 is O*T/2, where T is a quantity of antenna ports. Therefore, in other words, the over-sampling factor is used to physically represent a quantity of precoding vectors in a codebook or a quantity of spatial beams corresponding to precoding vectors. The over-sampling factor is set, so that a beam greater than a group of orthogonal bases can be used to perform sampling on space. The orthogonal basis is a group of orthogonal (discrete fourier transform, DFT) vectors.

The codebook parameter may be configured by directly adding the plurality of values of the codebook parameter or indication information of the plurality of values of the codebook parameter into the configuration information. That is, the configuration information includes a codebook parameter, the codebook parameter includes a plurality of values or indication information of a plurality of values, and each value corresponds to one codebook precision.

Alternatively, the codebook parameter may be configured by configuring a field. That is, the configuration information includes a parameter field (the name is only an example, and is not used to impose a limitation), the parameter field is used to indicate a value of a codebook parameter, the codebook parameter has a plurality of values, and each value corresponds to one codebook precision.

Alternatively, the codebook parameter may be configured two times. The plurality of values of the codebook parameter are configured for the first time, and a used value is dynamically indicated for the second time. That is, the configuration information includes a first configuration message and a second configuration message, the first configuration message includes a plurality of values of a codebook parameter or indication information of a plurality of values of a codebook parameter, and the second configuration message is used to indicate a value selected from the plurality of values.

In addition, the codebook parameter may be configured or sent by using higher layer signaling, physical layer signaling, or a combination of higher layer signaling and physical layer signaling. In this case, the configuration information in FIG. 4 may be higher layer signaling, or may be physical layer signaling, or may include higher layer signaling and physical layer signaling. For example, the first configuration message is higher layer signaling, and the second configuration message is physical layer signaling.

An example in which the spacing factor is configured by using higher layer signaling is used: The RAN node sends the configuration information in a form of higher layer signaling. The higher layer signaling may be RRC signaling, and is used to configure a CSI process or a non-zero power (Non-Zero Power, NZP) channel state information-reference signal (Channel State Information-Reference Signal, CSI-RS) resource.

The configuration information includes a plurality of values of the spacing factor, and each value corresponds to one codebook precision. The plurality of values may be configured by using one parameter, or may be separately configured by using a plurality of parameters. For example, in case of one parameter, the configuration information includes one parameter, codebookW1spacing, and the parameter has a plurality of values. In case of a plurality of parameters, the configuration information includes a plurality of parameters, codebookWlspacings, and each parameter has one value.

An example in which the spacing factor has four values is used. The configuration information may include a parameter, codebookW1spacing INTEGER(1...4), where INTEGER(1...4) represents indication information of the four values. For example, 1 indicates that a value of the spacing factor is 1; 2 indicates that a value of the spacing factor is 2; 3 indicates that a value of the spacing factor is 4; or 4 indicates that a value of the spacing factor is 8. In this case, signaling overheads can be reduced. Alternatively, a value of the spacing factor may be directly used as a value of a parameter, for example, codebookW1spacing INTEGER(1, 2, 4, 8). The configuration information may include four parameters: codebookW1spacing INTEGER(1), codebookW1spacing INTEGER(2), codebookW1spacing INTEGER(3), and codebookW1spacing INTEGER(4). A specific configuration form is not limited herein.

When a codebook with one precision needs to be configured, the spacing factor in the configuration information has one value. When a codebook with multi-precision is configured, the spacing factor in the configuration information has a plurality of values, and each value corresponds to one precision.

An example in which the spacing factor is configured by using physical layer signaling is used: The RAN node sends the configuration information in a form of physical layer signaling. The physical layer signaling is, for example, downlink control information (Downlink Control Information, DCI).

A field is added into the physical layer signaling or an existing reserved field is used. The field may be referred to as a spacing field (the name is only an example, and is not used to impose a limitation), and is used to indicate a value of the spacing factor.

Table 6 shows a correspondence between the spacing field and the value of the spacing factor. A four-stage codebook is used as an example. In this case, the spacing field may occupy 2 bits, and has four values. Each value corresponds to one value of the spacing factor. The first column in Table 6 is configuration of the physical layer signaling, and the second column is the value of the spacing factor. When the terminal receives the physical layer signaling and finds that the spacing field is "00", the terminal may determine that the value of the spacing factor is "1". Determining of another value is similar to this, and details are not described herein. It should be noted that, the correspondence between the spacing field and the value of the spacing factor is not limited to the form in Table 6. For example, rows and columns of the table may be exchanged, or the correspondence exists in another form such as a formula or code.

**Table 6**

| Value of a spacing field | Value of a spacing factor |
|---|---|
| 00 | 1 |
| 01 | 2 |
| 10 | 4 |
| 11 | 8 |

An example in which the spacing factor is configured by using a combination of higher layer signaling and physical layer signaling is used: The RAN node may configure a plurality of values of the spacing factor by using higher layer signaling, and dynamically indicate a used value by using physical layer signaling.

For example, the RAN node configures four parameters by using the higher layer signaling, and configures one value of the spacing factor by using each parameter. Table 7 shows a correspondence between a spacing field in the physical layer signaling and the four parameters. A four-stage codebook is used as an example. In this case, the spacing field may occupy 2 bits, and has four values. Each value corresponds to one parameter, and the parameter is used to configure a value of the spacing factor. When the terminal receives the physical layer signaling and finds that the spacing field is "01", the terminal may determine that a parameter corresponding to the spacing factor is a "parameter 2". Determining of another parameter is similar to this, and details are not described herein. In addition, the parameter configured at the higher layer in the table may be replaced with the value of the spacing factor configured at the higher layer. It should be noted that, the correspondence between the spacing field and the parameter is not limited to the form in Table 7. For example, rows and columns of the table may be exchanged, or the correspondence exists in another form such as a formula or code.

**Table 7**

| Value of a spacing field | Parameter configured at a higher layer |
|---|---|
| 00 | Parameter 1 |

(continued)

| Value of a spacing field | Parameter configured at a higher layer |
|---|---|
| 01 | Parameter 2 |
| 10 | Parameter 3 |
| 11 | Parameter 4 |

The foregoing describes the configuration of the codebook parameter by using the spacing factor as an example. Configuration of another codebook parameter, for example, configuration of the over-sampling factor, is the same as the configuration of the spacing factor.

An FD-MIMO technology is used as an example. A horizontal-dimension over-sampling factor O1 and a vertical-dimension over-sampling factor O2 may be configured in a manner in which the spacing factor is configured. For example, the configuration information includes two parameters. One parameter is the horizontal-dimension over-sampling factor, and the other parameter is the vertical-dimension over-sampling factor. A plurality of values or indication information of a plurality of values may be configured for the horizontal-dimension over-sampling factor. Alternatively, a plurality of values or indication information of a plurality of values may be configured for the vertical-dimension over-sampling factor. Alternatively, a plurality of values or indication information of a plurality of values may be configured for each of the over-sampling factors in the two dimensions. In this way, multi-precision configuration in one dimension or two dimensions can be implemented. In addition, a parameter field may be configured, and a value of the horizontal-dimension and/or vertical-dimension over-sampling factor is indicated by using the parameter field. Moreover, a plurality of values or indication information of a plurality of values of the horizontal-dimension and/or vertical-dimension over-sampling factor may be configured by using a first configuration message, and a second configuration message is used to indicate a value selected from the plurality of values. Herein, details are not described, and reference may be made to descriptions of the configuration of the spacing factor. Configuration of an over-sampling factor in each dimension may be similar to the configuration of the spacing factor.

The codebook parameter may be used by presetting a relationship between the value of the codebook parameter and a subscript of the precoding matrix, that is to say, the value of the codebook parameter has a preset relationship with the subscript of the precoding matrix. In this way, different subscripts of the precoding matrix can be obtained by using the preset relationship based on different values of the codebook parameter, to implement different codebook precision.

The spacing factor is used as an example. For ease of description, the spacing factor herein is expressed as codebookW1spacing (simplified as W1Spacing). In this case, a preset relationship between a subscript m of a precoding matrix $W_{m,n}^{(1)}$ and the spacing factor is as follows:

m is [2W1spacing*$i_1$+0; 2W1spacing*$i_1$+W1spacing; 2W1spacing*$i_1$+2W1spacing; 2W1spacing*$i_1$+3W1spacing], n is similar to that in the prior art, and details are not described herein again.

An example of four-stage codebook precision, 4T, and RI=1 is used for description.

When configured codebook precision is $2\pi/4$, as shown by the first-stage precision in FIG. 5, W1Spacing=8 and a table of the precoding matrix is shown in Table 8-1 below.

**Table 8-1**

| $i_1$ | $i_2$ | | | | | | | |
|---|---|---|---|---|---|---|---|---|
| | 0 | 1 | 2 | 3 | 4 | 5 | 6 | 7 |
| 0 | $W_{i_1,0}^{(1)}$ | $W_{i_1,8}^{(1)}$ | $W_{i_1,16}^{(1)}$ | $W_{i_1,24}^{(1)}$ | $W_{i_1+8,2}^{(1)}$ | $W_{i_1+8,10}^{(1)}$ | $W_{i_1+8,18}^{(1)}$ | $W_{i_1+8,26}^{(1)}$ |
| $i_1$ | $i_2$ | | | | | | | |
| | 8 | 9 | 10 | 11 | 12 | 13 | 14 | 15 |
| 0 | $W_{i_1+16,4}^{(1)}$ | $W_{i_1+16,12}^{(1)}$ | $W_{i_1+16,20}^{(1)}$ | $W_{i_1+16,28}^{(1)}$ | $W_{i_1+24,6}^{(1)}$ | $W_{i_1+24,14}^{(1)}$ | $W_{i_1+24,22}^{(1)}$ | $W_{i_1+24,30}^{(1)}$ |
| where | $$W_{m,n}^{(1)} = \frac{1}{2}\begin{bmatrix} v'_m \\ \varphi'_n v'_m \end{bmatrix}$$ | | | | | | | |

Because $i_1=0$ in this case, 2W1spacing*$i_1$ may be expressed as $i_1$. In this case, m is separately $i_1$, $i_1+8$, $i_1+16$, and $i_1+24$. There is one W1, and there are four precoding vectors with a spacing of $2\pi/4$ in one W1.

When configured codebook precision is $2\pi/8$, as shown by the second-stage precision in FIG. 5, W1Spacing=4 and a table of the precoding matrix is shown in Table 8-2 below.

Table 8-2

| $i_1$ | $i_2$ | | | | | | | |
|---|---|---|---|---|---|---|---|---|
| | 0 | 1 | 2 | 3 | 4 | 5 | 6 | 7 |
| 0 to 3 | $W_{8i_1,0}^{(1)}$ | $W_{8i_1,8}^{(1)}$ | $W_{8i_1,16}^{(1)}$ | $W_{8i_1,24}^{(1)}$ | $W_{8i_1+4,2}^{(1)}$ | $W_{8i_1+4,10}^{(1)}$ | $W_{8i_1+4,18}^{(1)}$ | $W_{8i_1+4,26}^{(1)}$ |
| $i_1$ | $i_2$ | | | | | | | |
| | 8 | 9 | 10 | 11 | 12 | 13 | 14 | 15 |
| 0 to 3 | $W_{8i_1+8,4}^{(1)}$ | $W_{8i_1+8,12}^{(1)}$ | $W_{8i_1+8,20}^{(1)}$ | $W_{8i_1+8,28}^{(1)}$ | $W_{8i_1+12,6}^{(1)}$ | $W_{8i_1+12,14}^{(1)}$ | $W_{8i_1+12,22}^{(1)}$ | $W_{8i_1+12,30}^{(1)}$ |
| where | $$W_{m,n}^{(1)} = \frac{1}{2}\begin{bmatrix} v'_m \\ \varphi'_n v'_m \end{bmatrix}$$ | | | | | | | |

In this case, m is separately $8i_1$, $8i_1+4$, $8i_1+8$, and $8i_1+12$. There are four W1, and there are four precoding vectors with a spacing of $2\pi/8$ in one W1.

When configured codebook precision is $2\pi/16$, as shown by the third-stage precision in FIG. 5, W1Spacing=2 and a table of the precoding matrix is shown in Table 8-3 below.

**Table 8-3**

| $i_1$ | $i_2$ | | | | | | | |
|---|---|---|---|---|---|---|---|---|
| | 0 | 1 | 2 | 3 | 4 | 5 | 6 | 7 |
| 0 to 7 | $W^{(1)}_{4i_1,0}$ | $W^{(1)}_{4i_1,8}$ | $W^{(1)}_{4i_1,16}$ | $W^{(1)}_{4i_1,24}$ | $W^{(1)}_{4i_1+2,2}$ | $W^{(1)}_{4i_1+2,10}$ | $W^{(1)}_{4i_1+2,18}$ | $W^{(1)}_{4i_1+2,26}$ |
| $i_1$ | $i_2$ | | | | | | | |
| | 8 | 9 | 10 | 11 | 12 | 13 | 14 | 15 |
| 0 to 7 | $W^{(1)}_{4i_1+4,4}$ | $W^{(1)}_{4i_1+4,12}$ | $W^{(1)}_{4i_1+4,20}$ | $W^{(1)}_{4i_1+4,28}$ | $W^{(1)}_{4i_1+6,6}$ | $W^{(1)}_{4i_1+6,14}$ | $W^{(1)}_{4i_1+6,22}$ | $W^{(1)}_{4i_1+6,30}$ |

where

$$W^{(1)}_{m,n} = \frac{1}{2}\begin{bmatrix} v'_m \\ \varphi'_n v'_m \end{bmatrix}$$

In this case, m is separately $4i_1$, $4i_1+2$, $4i_1+4$, and $4i_1+6$. There are eight W1, and there are four precoding vectors with a spacing of $2\pi/16$ in one W1.

When configured codebook precision is $2\pi/32$, as shown by the fourth-stage precision in FIG. 5, W1Spacing=1 and a table of the precoding matrix is shown in Table 8-4 below.

**Table 8-4**

| $i_1$ | $i_2$ | | | | | | | |
|---|---|---|---|---|---|---|---|---|
| | 0 | 1 | 2 | 3 | 4 | 5 | 6 | 7 |
| 0 to 15 | $W_{2i_1,0}^{(1)}$ | $W_{2i_1,8}^{(1)}$ | $W_{2i_1,16}^{(1)}$ | $W_{2i_1,24}^{(1)}$ | $W_{2i_1+1,2}^{(1)}$ | $W_{2i_1+1,10}^{(1)}$ | $W_{2i_1+1,18}^{(1)}$ | $W_{2i_1+1,26}^{(1)}$ |
| 8 | 9 | 10 | 11 | 12 | 13 | 14 | 15 | |
| 0 to 15 | $W_{2i_1+2,4}^{(1)}$ | $W_{2i_1+2,12}^{(1)}$ | $W_{2i_1+2,20}^{(1)}$ | $W_{2i_1+2,28}^{(1)}$ | $W_{2i_1+3,6}^{(1)}$ | $W_{2i_1+3,14}^{(1)}$ | $W_{2i_1+3,22}^{(1)}$ | $W_{2i_1+3,30}^{(1)}$ |
| where | $$W_{m,n}^{(1)} = \frac{1}{2}\begin{bmatrix} v'_m \\ \varphi'_n v'_m \end{bmatrix}$$ | | | | | | | |

In this case, m is separately $2i_1$, $2i_1+1$, $2i_1+2$, and $2i_1+3$. There are sixteen W1, and there are four precoding vectors with a spacing of $2\pi/32$ in one W1.

A manner of determining the precoding matrix $W_{m,n}^{(1)}$ is unchanged, that is, $v'_m$ and $\varphi'_n$ may be determined based on values of m and n, where $v'_m$ represents the precoding vector selected from the vector group corresponding to W1, $\varphi'_n$ represents the polarization phase, and formulas of $v'_m$ and $\varphi'_n$ are as follows:

$$\varphi'_n = e^{j2\pi n/32}$$

$$v'_m = \begin{bmatrix} 1 & e^{j2\pi m/32} \end{bmatrix}^T$$

The determining manner is similar to that in the prior art, and details are not described herein again.

Then, an example of four-stage codebook precision, 8T, and RI=1 is used for description.

When configured codebook precision is $2\pi/4$, as shown by the first-stage precision in FIG. 5, W1Spacing=8 and a table of the precoding matrix is shown in Table 9-1 below.

**Table 9-1**

| $i_1$ | $i_2$ | | | | | | | |
|---|---|---|---|---|---|---|---|---|
| | 0 | 1 | 2 | 3 | 4 | 5 | 6 | 7 |
| 0 | $W_{2i_1,0}^{(1)}$ | $W_{2i_1,1}^{(1)}$ | $W_{2i_1,2}^{(1)}$ | $W_{2i_1,3}^{(1)}$ | $W_{2i_1+8,0}^{(1)}$ | $W_{2i_1+8,1}^{(1)}$ | $W_{2i_1+8,2}^{(1)}$ | $W_{2i_1+8,3}^{(1)}$ |
| $i_1$ | $i_2$ | | | | | | | |
| | 8 | 9 | 10 | 11 | 12 | 13 | 14 | 15 |
| 0 | $W_{2i_1+16,0}^{(1)}$ | $W_{2i_1+16,1}^{(1)}$ | $W_{2i_1+16,2}^{(1)}$ | $W_{2i_1+16,3}^{(1)}$ | $W_{2i_1+24,0}^{(1)}$ | $W_{2i_1+24,1}^{(1)}$ | $W_{2i_1+32,2}^{(1)}$ | $W_{2i_1+24,3}^{(1)}$ |
| where | $$W_{m,n}^{(1)} = \frac{1}{\sqrt{8}} \begin{bmatrix} v_m \\ \varphi_n v_m \end{bmatrix}$$ | | | | | | | |

Because $i_1=0$ in this case, 2W1spacing*$i_1$ may be expressed as $2i_1$. In this case, m is separately $2i_1$, $2i_1+8$, $2i_1+16$, and $2i_1+24$.

In this case, there is one W1, and there are four precoding vectors with a spacing of $2\pi/4$ in one W1.

When configured codebook precision is $2\pi/8$, as shown by the second-stage precision in FIG. 5, W1Spacing=4 and a table of the precoding matrix is shown in Table 9-2 below.

**Table 9-2**

| $i_1$ | $i_2$ | | | | | | | |
|---|---|---|---|---|---|---|---|---|
| | 0 | 1 | 2 | 3 | 4 | 5 | 6 | 7 |
| 0 to 3 | $W_{8i_1,0}^{(1)}$ | $W_{8i_1,1}^{(1)}$ | $W_{8i_1,2}^{(1)}$ | $W_{8i_1,3}^{(1)}$ | $W_{8i_1+4,0}^{(1)}$ | $W_{8i_1+4,1}^{(1)}$ | $W_{8i_1+4,2}^{(1)}$ | $W_{8i_1+4,3}^{(1)}$ |
| $i_1$ | $i_2$ | | | | | | | |
| | 8 | 9 | 10 | 11 | 12 | 13 | 14 | 15 |
| 0 to 3 | $W_{8i_1+8,0}^{(1)}$ | $W_{8i_1+8,1}^{(1)}$ | $W_{8i_1+8,2}^{(1)}$ | $W_{8i_1+8,3}^{(1)}$ | $W_{8i_1+12,0}^{(1)}$ | $W_{8i_1+12,1}^{(1)}$ | $W_{8i_1+12,2}^{(1)}$ | $W_{8i_1+12,3}^{(1)}$ |
| where | $$W_{m,n}^{(1)} = \frac{1}{\sqrt{8}}\begin{bmatrix} v_m \\ \varphi_n v_m \end{bmatrix}$$ | | | | | | | |

In this case, m is separately $8i_1$, $8i_1+4$, $8i_1+8$, and $8i_1+12$. There are four W1, and there are four precoding vectors with a spacing of $2\pi/8$ in one W1.

When configured codebook precision is $2\pi/16$, as shown by the third-stage precision in FIG. 5, W1Spacing=2 and a table of the precoding matrix is shown in Table 9-3 below.

**Table 9-3**

| $i_1$ | $i_2$ | | | | | | | |
|---|---|---|---|---|---|---|---|---|
| | 0 | 1 | 2 | 3 | 4 | 5 | 6 | 7 |
| 0 to 7 | $W_{4i_1,0}^{(1)}$ | $W_{4i_1,1}^{(1)}$ | $W_{4i_1,2}^{(1)}$ | $W_{4i_1,3}^{(1)}$ | $W_{4i_1+2,0}^{(1)}$ | $W_{4i_1+2,1}^{(1)}$ | $W_{4i_1+2,2}^{(1)}$ | $W_{4i_1+2,3}^{(1)}$ |
| $i_1$ | $i_2$ | | | | | | | |
| | 8 | 9 | 10 | 11 | 12 | 13 | 14 | 15 |
| 0 to 7 | $W_{4i_1+4,0}^{(1)}$ | $W_{4i_1+4,1}^{(1)}$ | $W_{4i_1+4,2}^{(1)}$ | $W_{4i_1+4,3}^{(1)}$ | $W_{4i_1+6,0}^{(1)}$ | $W_{4i_1+6,1}^{(1)}$ | $W_{4i_1+6,2}^{(1)}$ | $W_{4i_1+6,3}^{(1)}$ |
| where | $$W_{m,n}^{(1)} = \frac{1}{\sqrt{8}}\begin{bmatrix} v_m \\ \varphi_n v_m \end{bmatrix}$$ | | | | | | | |

In this case, m is separately $4i_1$, $4i_1+2$, $4i_1+4$, and $4i_1+6$. There are eight W1, and there are four precoding vectors with a spacing of $2\pi/16$ in one W1.

When configured codebook precision is $2\pi/32$, as shown by the fourth-stage precision in FIG. 5, W1Spacing=1 and a table of the precoding matrix is shown in Table 9-4 below.

**Table 9-4**

| $i_1$ | $i_2$ | | | | | | | |
|---|---|---|---|---|---|---|---|---|
| | 0 | 1 | 2 | 3 | 4 | 5 | 6 | 7 |
| 0 to 15 | $W_{2i_1,0}^{(1)}$ | $W_{2i_1,1}^{(1)}$ | $W_{2i_1,2}^{(1)}$ | $W_{2i_1,3}^{(1)}$ | $W_{2i_1+1,0}^{(1)}$ | $W_{2i_1+1,1}^{(1)}$ | $W_{2i_1+1,2}^{(1)}$ | $W_{2i_1+1,3}^{(1)}$ |

(continued)

| $i_1$ | $i_2$ | | | | | | | |
|---|---|---|---|---|---|---|---|---|
| | 8 | 9 | 10 | 11 | 12 | 13 | 14 | 15 |
| 0 to 15 | $W_{2i_1+2,0}^{(1)}$ | $W_{2i_1+2,1}^{(1)}$ | $W_{2i_1+2,2}^{(1)}$ | $W_{2i_1+2,3}^{(1)}$ | $W_{2i_1+3,0}^{(1)}$ | $W_{2i_1+3,1}^{(1)}$ | $W_{2i_1+3,2}^{(1)}$ | $W_{2i_1+3,3}^{(1)}$ |
| where | $$W_{m,n}^{(1)} = \frac{1}{\sqrt{8}}\begin{bmatrix} v_m \\ \varphi_n v_m \end{bmatrix}$$ | | | | | | | |

In this case, m is separately $2i_1$, $2i_1+1$, $2i_1+2$, and $2i_1+3$. There are sixteen W1, and there are four precoding vectors with a spacing of $2\pi/32$ in one W1.

A manner of determining the precoding matrix $W_{m,n}^{(1)}$ is unchanged, that is, $v_m$ and $\varphi_n$ may be determined based on values of m and n, where $v_m$ represents the precoding vector selected from the vector group corresponding to W1, $\varphi_n$ represents the polarization phase, and formulas of $v_m$ and $\varphi_n$ are as follows:

$$\varphi_n = e^{j\pi n/2}$$

$$v_m = \begin{bmatrix} 1 & e^{j2\pi m/32} & e^{j4\pi m/32} & e^{j6\pi m/32} \end{bmatrix}^{\mathrm{T}}.$$

The determining manner is similar to that in the prior art, and details are not described herein again.

In the foregoing example, for each value of i1, four precoding matrices corresponding to i2=0, 4, 8, and 12 correspond to four precoding vectors drawn for each value of i1 in case of precision at each stage in FIG. 5. For each value of i1, i2=0, 1, 2, and 3 correspond to four polarization phases φ_0, φ_1, φ_2, and φ_3. Selection of the precoding vector and selection of the polarization phase are described above, and details are not described herein again. An example in which $i_1=0$ and $i_2=0$, 4, 8, and 12 is used. Four corresponding precoding matrices are shown in Table 10 below.

**Table 10**

| $i_1 = 0, i_2 = 0$ | $$W = W_{0,0}^{(1)} = \frac{1}{\sqrt{8}}\begin{bmatrix} v_0 \\ \varphi_0 v_0 \end{bmatrix} = \frac{1}{\sqrt{8}}\begin{bmatrix} 1 \\ 1 \\ 1 \\ 1 \\ 1 \\ 1 \\ 1 \\ 1 \end{bmatrix}$$ |
|---|---|
| $i_1 = 0, i_2 = 4$ | $$W = W_{8,0}^{(1)} = \frac{1}{\sqrt{8}}\begin{bmatrix} v_8 \\ \varphi_0 v_8 \end{bmatrix} = \frac{1}{\sqrt{8}}\begin{bmatrix} 1 \\ e^{j2\pi 8/32} \\ e^{j4\pi 8/32} \\ e^{j6\pi 8/32} \\ 1 \\ e^{j2\pi 8/32} \\ e^{j4\pi 8/32} \\ e^{j6\pi 8/32} \end{bmatrix} = \frac{1}{\sqrt{8}}\begin{bmatrix} 1 \\ j \\ -1 \\ -j \\ 1 \\ j \\ 1 \\ -j \end{bmatrix}$$ |

(continued)

| $i_1 = 0, i_2 = 8$ | $W = W_{16,0}^{(1)} = \dfrac{1}{\sqrt{8}} \begin{bmatrix} v_{16} \\ \varphi_0 v_{16} \end{bmatrix} = \dfrac{1}{\sqrt{8}} \begin{bmatrix} 1 \\ e^{j2\pi16/32} \\ e^{j4\pi16/32} \\ e^{j6\pi16/32} \\ 1 \\ e^{j2\pi16/32} \\ e^{j4\pi16/32} \\ e^{j6\pi16/32} \end{bmatrix} = \dfrac{1}{\sqrt{8}} \begin{bmatrix} 1 \\ -1 \\ 1 \\ -1 \\ 1 \\ -1 \\ 1 \\ -1 \end{bmatrix}$ |
| $i_1 = 0, i_2 = 12$ | $W = W_{24,0}^{(1)} = \dfrac{1}{\sqrt{8}} \begin{bmatrix} v_{24} \\ \varphi_0 v_{24} \end{bmatrix} = \dfrac{1}{\sqrt{8}} \begin{bmatrix} 1 \\ e^{j2\pi24/32} \\ e^{j4\pi24/32} \\ e^{j6\pi24/32} \\ 1 \\ e^{j2\pi24/32} \\ e^{j4\pi24/32} \\ e^{j6\pi24/32} \end{bmatrix} = \dfrac{1}{\sqrt{8}} \begin{bmatrix} 1 \\ -j \\ -1 \\ j \\ 1 \\ -j \\ -1 \\ j \end{bmatrix}$ |

It should be noted that, the four-stage codebook precision is used as an example for description in the foregoing embodiment, but is not used to limit this application. Implementation of codebook precision corresponding to more or fewer stages is similar to this, and persons skilled in the art may implement the codebook precision with reference to the foregoing descriptions. For example, in case of five-stage precision, codebook precision may be increased to $2\pi/64$, and a range of W1 corresponding to fifth-stage precision is limited by information about a codebook reported at the fourth stage.

In the foregoing step S430, when the terminal reports the information about the first-stage codebook (lowest precision stage), the terminal determines precision of the first-stage codebook based on the configuration information, and reports information about a codebook with the precision of the first-stage codebook. When the terminal reports the information about the second-stage codebook and the higher-stage codebook, the terminal determines precision of a current-stage codebook based on the configuration information, determines a range of the current-stage codebook based on information about a previous-stage codebook, and reports, within the range of the current-stage codebook, information about a codebook with the precision of the current-stage codebook.

Before the terminal reports the information about a codebook, the terminal measures a channel, for example, measures a reference signal sent by the RAN node to obtain a channel H and determine an optimal precoding matrix W, so that the equivalent channel W*H has a highest signal to interference plus noise ratio (signal to interference plus noise ratio, SINR); and reports the information about the codebook. The information about the codebook is used to determine the optimal W. The process may be understood as a process in which the terminal measures the information about the codebook. It should be noted that, the terminal may perform measurement outside a range, but does not use or report the measurement result.

In the foregoing step S440, when receiving the information about the first-stage codebook, the RAN node determines the precoding matrix based on the information about the first-stage codebook. For example, when the information about the first-stage codebook includes a first codebook index and a second codebook index, the RAN node determines the precoding matrix based on the first codebook index and the second codebook index. For another example, when the information about the first-stage codebook includes a second codebook index, the RAN node determines the precoding matrix by using a default value of a first codebook index and the received second codebook index. When the RAN node receives the information about the second-stage codebook or the higher-stage codebook, the RAN node determines the precoding matrix based on information about a previous-stage codebook and information about a current-stage codebook. For example, when the information that is about the second-stage codebook or the higher-stage codebook and that is received by the RAN node includes a second codebook index, the RAN node determines a first codebook index of the information about the current-stage codebook based on a second codebook index of the information about the previous-stage codebook, and determines the precoding matrix based on the first codebook index and a second codebook index that are of the information about the current-stage codebook.

The foregoing is described by using an example in which W1 has one dimension, that is, codebook information corresponding to W1 includes a codebook index in one dimension. When W1 has more dimensions, for example, a horizontal dimension and a vertical dimension, configuration may be performed in any dimension in the foregoing manner.

In this way, a multi-stage codebook structure can be implemented.

The FD-MIMO technology is used as an example below. A codebook index corresponding to W1 includes a horizontal-dimension codebook index $i_{1,1}$ and a vertical-dimension codebook index $i_{1,2}$ (the subscript herein has a meaning different from the subscript M in the foregoing embodiment, and $i_{1,1}$ and $i_{1,2}$ separately represent different dimensions of a first codebook), that is, the first codebook index includes a horizontal-dimension codebook index $i_{1,1}$ and a vertical-dimension codebook index $i_{1,2}$. A codebook index corresponding to W2 includes $i_2$. In this embodiment, a plurality of values may be configured for the over-sampling factor, and the configuration is the same as the configuration manner of the spacing factor. Details are not described herein again. In this embodiment, the over-sampling factor may include a horizontal-dimension over-sampling factor and a vertical-dimension over-sampling factor.

A plurality of values may be configured for the horizontal-dimension over-sampling factor in a same configuration manner as the spacing factor in the foregoing embodiment, so that multi-precision configuration in the horizontal dimension is implemented. A plurality of values may also be configured for the vertical-dimension over-sampling factor in a same configuration manner as the spacing factor in the foregoing embodiment, so that multi-precision configuration in the vertical dimension is implemented. Multi-precision configuration may be performed in both of the two dimensions or only in one dimension. No limitation is imposed in this embodiment of this application.

The multi-stage codebook precision shown in FIG. 5 is configured by using the horizontal dimension as an example. In this case, in the horizontal dimension: For first-stage codebook precision, a total quantity of W1 is 1, that is, there is one vector group. In this case, a value of $i_{1,1}$ only needs to reflect the quantity 1, for example, $i_{1,1}=0$. Therefore, for the first-stage codebook precision, $i_{1,1}$ only needs to occupy 1 bit. For second-stage codebook precision, a total quantity of W1 is 4, that is, there are four vector groups. In this case, a value of $i_{1,1}$ only needs to reflect the quantity 4, for example, $i_{1,1}=0$ to 3. Therefore, for the second-stage codebook precision, $i_{1,1}$ only needs to occupy 2 bits. For third-stage codebook precision, a total quantity of W1 is 8, that is, there are eight vector groups. In this case, a value of $i_{1,1}$ only needs to reflect the quantity 8, for example, $i_{1,1}=0$ to 7. Therefore, for the third-stage codebook precision, $i_{1,1}$ only needs to occupy 3 bits. For fourth-stage codebook precision, a total quantity of W1 is 16, that is, there are sixteen vector groups. In this case, a value of $i_{1,1}$ only needs to reflect the quantity 16, for example, $i_{1,1}=0$ to 15. Therefore, for the fourth-stage codebook precision, $i_{1,1}$ only needs to occupy 4 bits.

The vertical dimension is similar to this. When configuration is performed in both of the two dimensions, configuration may be separately performed in the two dimensions, and finally, only a Kronecker product operation is performed on W1 in the two dimensions.

Descriptions of W2 are the same as those in the foregoing embodiment, and details are not described herein again.

An example in which multi-precision configuration in the foregoing embodiment is performed in the horizontal dimension is used below, and the vertical dimension is similar to this. Herein, four-stage codebook precision is used as an example for description. The horizontal-dimension over-sampling factor is expressed as W1Spacing. In this case, a preset relationship between a subscript 1 of a precoding matrix $W_{l,m,n}^{(1)}$ and the over-sampling factor is as follows:

1 is [2W1spacing*$i_{1,1}$+0; 2W1spacing*$i_{1,1}$+W1spacing; 2W1spacing*$i_{1,1}$+2W1spacing; 2W1spacing*$i_{1,1}$+3W1spacing], n is similar to that in the prior art, and details are not described herein again.

In case of the vertical dimension, n and the over-sampling factor meet the foregoing preset relationship, that is, n is [2W1spacing*$i_{1,2}$+0; 2W1spacing*$i_{1,2}$+W1spacing; 2W1spacing*$i_{1,2}$+2W1spacing; 2W1spacing*$i_{1,2}$+3W1spacing]. It should be noted that, when $i_{1,1}$ or $i_{1,2}$ is equal to 0, the foregoing formula may be transformed.

When configured codebook precision is $2\pi/4$, as shown by the first-stage precision in FIG. 5, W1Spacing=8 and a table of the precoding matrix is shown in Table 11-1 below.

**Table 11-1**

| $i_{1,1}$ | $i_{1,2}$ | $i_2$ | | | | | | | |
|---|---|---|---|---|---|---|---|---|---|
| | | 0 | 1 | 2 | 3 | 4 | 5 | 6 | 7 |
| 0 | 0 to 3 | $W^{(1)}_{i_{1,1},2i_{1,2},0}$ | $W^{(1)}_{i_{1,1},2i_{1,2},1}$ | $W^{(1)}_{i_{1,1},2i_{1,2},2}$ | $W^{(1)}_{i_{1,1},2i_{1,2},3}$ | $W^{(1)}_{i_{1,1}+8,2i_{1,2},0}$ | $W^{(1)}_{i_{1,1}+8,2i_{1,2},1}$ | $W^{(1)}_{i_{1,1}+8,2i_{1,2},2}$ | $W^{(1)}_{i_{1,1}+8,2i_{1,2},3}$ |
| 0 | 0 to 3 | $i_2$ | | | | | | | |
| | | 8 | 9 | 10 | 11 | 12 | 13 | 14 | 15 |
| 0 | 0 to 3 | $W^{(1)}_{i_{1,1}+16,2i_{1,2},0}$ | $W^{(1)}_{i_{1,1}+16,2i_{1,2},1}$ | $W^{(1)}_{i_{1,1}+16,2i_{1,2},2}$ | $W^{(1)}_{i_{1,1}+16,2i_{1,2},3}$ | $W^{(1)}_{i_{1,1}+24,2i_{1,2},0}$ | $W^{(1)}_{i_{1,1}+24,2i_{1,2},1}$ | $W^{(1)}_{i_{1,1}+24,2i_{1,2},2}$ | $W^{(1)}_{i_{1,1}+24,2i_{1,2},3}$ |
| 0 | 0 to 3 | $i_2$ | | | | | | | |
| | | 16 | 17 | 18 | 19 | 20 | 21 | 22 | 23 |
| 0 | 0 to 3 | $W^{(1)}_{i_{1,1},2i_{1,2}+1,0}$ | $W^{(1)}_{i_{1,1},2i_{1,2}+1,1}$ | $W^{(1)}_{i_{1,1},2i_{1,2}+1,2}$ | $W^{(1)}_{i_{1,1},2i_{1,2}+1,3}$ | $W^{(1)}_{i_{1,1}+8,2i_{1,2}+1,0}$ | $W^{(1)}_{i_{1,1}+82i_{1,2}+1,1}$ | $W^{(1)}_{i_{1,1}+8,2i_{1,2}+1,2}$ | $W^{(1)}_{i_{1,1}+8,2i_{1,2}+1,3}$ |
| 0 | 0 to 3 | $i_2$ | | | | | | | |
| | | 24 | 25 | 26 | 27 | 28 | 29 | 30 | 31 |
| 0 | 0 to 3 | $W^{(1)}_{i_{1,1}+16,2i_{1,2}+1,0}$ | $W^{(1)}_{i_{1,1}+16,2i_{1,2}+1,1}$ | $W^{(1)}_{i_{1,1}+16,2i_{1,2}+1,2}$ | $W^{(1)}_{i_{1,1}+16,2i_{1,2}+1,3}$ | $W^{(1)}_{i_{1,1}+24,2i_{1,2}+1,0}$ | $W^{(1)}_{i_{1,1}+24,2i_{1,2}+1,1}$ | $W^{(1)}_{i_{1,1}+24,2i_{1,2}+1,2}$ | $W^{(1)}_{i_{1,1}+24,2i_{1,2}+1,3}$ |

where $W_{l,m,n}^{(1)} = \dfrac{1}{\sqrt{P}}\begin{bmatrix} v_{l,m} \\ \varphi_n v_{l,m} \end{bmatrix}$

Because $i_{1,1}=0$ in this case, 2W1spacing*$i_{1,1}$ may be expressed as $i_{1,1}$. In this case, 1 is separately $i_{1,1}$, $i_{1,1}+8$, $i_{1,1}+16$, and $i_{1,1}+24$. There is one W1 in the horizontal dimension, and there are four precoding vectors with a spacing of $2\pi/4$ in one W1.

When configured codebook precision is $2\pi/8$, as shown by the second-stage precision in FIG. 5, W1Spacing=4 and a table of the precoding matrix is shown in Table 11-2 below.

**Table 11-2**

| $i_{1,1}$ | $i_{1,2}$ | $i_2$ | | | | | | | |
|---|---|---|---|---|---|---|---|---|---|
| | | 0 | 1 | 2 | 3 | 4 | 5 | 6 | 7 |
| 0 to 3 | 0 to 3 | $W^{(1)}_{8i_{1,1},2i_{1,2},0}$ | $W^{(1)}_{8i_{1,1},2i_{1,2},1}$ | $W^{(1)}_{8i_{1,1},2i_{1,2},2}$ | $W^{(1)}_{8i_{1,1},2i_{1,2},3}$ | $W^{(1)}_{8i_{1,1}+4,2i_{1,2},0}$ | $W^{(1)}_{8i_{1,1}+4,2i_{1,2},1}$ | $W^{(1)}_{8i_{1,1}+4,2i_{1,2},2}$ | $W^{(1)}_{8i_{1,1}+4,2i_{1,2},3}$ |
| 0 to 3 | 0 to 3 | $i_2$ | | | | | | | |
| | | 8 | 9 | 10 | 11 | 12 | 13 | 14 | 15 |
| 0 to 3 | 0 to 3 | $W^{(1)}_{8i_{1,1}+8,2i_{1,2},0}$ | $W^{(1)}_{8i_{1,1}+8,2i_{1,2},1}$ | $W^{(1)}_{8i_{1,1}+8,2i_{1,2},2}$ | $W^{(1)}_{8i_{1,1}+8,2i_{1,2},3}$ | $W^{(1)}_{8i_{1,1}+12,2i_{1,2},0}$ | $W^{(1)}_{8i_{1,1}+12,2i_{1,2},1}$ | $W^{(1)}_{8i_{1,1}+12,2i_{1,2},2}$ | $W^{(1)}_{8i_{1,1}+12,2i_{1,2},3}$ |
| 0 to 3 | 0 to 3 | $i_2$ | | | | | | | |
| | | 16 | 17 | 18 | 19 | 20 | 21 | 22 | 23 |
| 0 to 3 | 0 to 3 | $W^{(1)}_{8i_{1,1},2i_{1,2}+1,0}$ | $W^{(1)}_{8i_{1,1},2i_{1,2}+1,1}$ | $W^{(1)}_{8i_{1,1},2i_{1,2}+1,2}$ | $W^{(1)}_{8i_{1,1},2i_{1,2}+1,3}$ | $W^{(1)}_{8i_{1,1}+4,2i_{1,2}+1,0}$ | $W^{(1)}_{8i_{1,1}+4,2i_{1,2}+1,1}$ | $W^{(1)}_{8i_{1,1}+4,2i_{1,2}+1,2}$ | $W^{(1)}_{8i_{1,1}+4,2i_{1,2}+1,3}$ |
| 0 to 3 | 0 to 3 | $i_2$ | | | | | | | |
| | | 24 | 25 | 26 | 27 | 28 | 29 | 30 | 31 |
| 0 to 3 | 0 to 3 | $W^{(1)}_{8i_{1,1}+8,2i_{1,2}+1,0}$ | $W^{(1)}_{8i_{1,1}+8,2i_{1,2}+1,1}$ | $W^{(1)}_{8i_{1,1}+8,2i_{1,2}+1,2}$ | $W^{(1)}_{8i_{1,1}+8,2i_{1,2}+1,3}$ | $W^{(1)}_{8i_{1,1}+12,2i_{1,2}+1,0}$ | $W^{(1)}_{8i_{1,1}+12,2i_{1,2}+1,1}$ | $W^{(1)}_{8i_{1,1}+12,2i_{1,2}+1,2}$ | $W^{(1)}_{8i_{1,1}+12,2i_{1,2}+1,3}$ |

where $W_{l,m,n}^{(1)} = \dfrac{1}{\sqrt{P}}\begin{bmatrix} v_{l,m} \\ \varphi_n v_{l,m} \end{bmatrix}$

In this case, 1 is separately $8i_{1,1}$, $8i_{1,1}+4$, $8i_{1,1}+8$, and $8i_{1,1}+12$. There are four W1 in the horizontal dimension, and there are four precoding vectors with a spacing of $2\pi/8$ in one W1.

When configured codebook precision is $2\pi/16$, as shown by the third-stage precision in FIG. 5, W1Spacing=2 and a table of the precoding matrix is shown in Table 11-3 below.

**Table 11-3**

| $i_{1,1}$ | $i_{1,2}$ | $i_2$ | | | | | | | |
|---|---|---|---|---|---|---|---|---|---|
| | | 0 | 1 | 2 | 3 | 4 | 5 | 6 | 7 |
| 0 to 7 | 0 to 3 | $W^{(1)}_{4i_{1,1},2i_{1,2},0}$ | $W^{(1)}_{4i_{1,1},2i_{1,2},1}$ | $W^{(1)}_{4i_{1,1},2i_{1,2},2}$ | $W^{(1)}_{4i_{1,1},2i_{1,2},3}$ | $W^{(1)}_{4i_{1,1}+2,2i_{1,2},0}$ | $W^{(1)}_{4i_{1,1}+2,2i_{1,2},1}$ | $W^{(1)}_{4i_{1,1}+2,2i_{1,2},2}$ | $W^{(1)}_{4i_{1,1}+2,2i_{1,2},3}$ |
| 0 to 7 | 0 to 3 | $i_2$ | | | | | | | |
| | | 8 | 9 | 10 | 11 | 12 | 13 | 14 | 15 |
| 0 to 7 | 0 to 3 | $W^{(1)}_{4i_{1,1}+4,2i_{1,2},0}$ | $W^{(1)}_{4i_{1,1}+4,2i_{1,2},1}$ | $W^{(1)}_{4i_{1,1}+4,2i_{1,2},2}$ | $W^{(1)}_{4i_{1,1}+4,2i_{1,2},3}$ | $W^{(1)}_{4i_{1,1}+6,2i_{1,2},0}$ | $W^{(1)}_{4i_{1,1}+6,2i_{1,2},1}$ | $W^{(1)}_{4i_{1,1}+6,2i_{1,2},2}$ | $W^{(1)}_{4i_{1,1}+6,2i_{1,2},3}$ |
| 0 to 7 | 0 to 3 | $i_2$ | | | | | | | |
| | | 16 | 17 | 18 | 19 | 20 | 21 | 22 | 23 |
| 0 to 7 | 0 to 3 | $W^{(1)}_{4i_{1,1},2i_{1,2}+1,0}$ | $W^{(1)}_{4i_{1,1},2i_{1,2}+1,1}$ | $W^{(1)}_{4i_{1,1},2i_{1,2}+1,2}$ | $W^{(1)}_{4i_{1,1},2i_{1,2}+1,3}$ | $W^{(1)}_{4i_{1,1}+2,2i_{1,2}+1,0}$ | $W^{(1)}_{4i_{1,1}+2,2i_{1,2}+1,1}$ | $W^{(1)}_{4i_{1,1}+2,2i_{1,2}+1,2}$ | $W^{(1)}_{4i_{1,1}+2,2i_{1,2}+1,3}$ |
| 0 to 7 | 0 to 3 | $i_2$ | | | | | | | |
| | | 24 | 25 | 26 | 27 | 28 | 29 | 30 | 31 |
| 0 to 7 | 0 to 3 | $W^{(1)}_{4i_{1,1}+4,2i_{1,2}+1,0}$ | $W^{(1)}_{4i_{1,1}+4,2i_{1,2}+1,1}$ | $W^{(1)}_{4i_{1,1}+4,2i_{1,2}+1,2}$ | $W^{(1)}_{4i_{1,1}+4,2i_{1,2}+1,3}$ | $W^{(1)}_{4i_{1,1}+6,2i_{1,2}+1,0}$ | $W^{(1)}_{4i_{1,1}+6,2i_{1,2}+1,1}$ | $W^{(1)}_{4i_{1,1}+6,2i_{1,2}+1,2}$ | $W^{(1)}_{4i_{1,1}+6,2i_{1,2}+1,3}$ |

where $W^{(1)}_{l,m,n} = \dfrac{1}{\sqrt{P}}\begin{bmatrix} v_{l,m} \\ \varphi_n v_{l,m} \end{bmatrix}$

In this case, 1 is separately $4i_{1,1}$, $4i_{1,1}+2$, $4i_{1,1}+4$, and $4i_{1,1}+6$. There are eight W1 in the horizontal dimension, and there are four precoding vectors with a spacing of $2\pi/16$ in one W1.

When configured codebook precision is $2\pi/32$, as shown by the fourth-stage precision in FIG. 5, W1Spacing=1 and a table of the precoding matrix is shown in Table 11-4 below.

**Table 11-4**

| $i_{1,1}$ | $i_{1,2}$ | $i_2$ | | | | | | | |
|---|---|---|---|---|---|---|---|---|---|
| | | 0 | 1 | 2 | 3 | 4 | 5 | 6 | 7 |
| 0 to 15 | 0 to 3 | $W^{(1)}_{2i_{1,1},2i_{1,2},0}$ | $W^{(1)}_{2i_{1,1},2i_{1,2},1}$ | $W^{(1)}_{2i_{1,1},2i_{1,2},2}$ | $W^{(1)}_{2i_{1,1},2i_{1,2},3}$ | $W^{(1)}_{2i_{1,1}+1,2i_{1,2},0}$ | $W^{(1)}_{2i_{1,1}+1,2i_{1,2},1}$ | $W^{(1)}_{2i_{1,1}+1,2i_{1,2},2}$ | $W^{(1)}_{2i_{1,1}+1,2i_{1,2},3}$ |
| 0 to 15 | 0 to 3 | $i_2$ | | | | | | | |
| | | 8 | 9 | 10 | 11 | 12 | 13 | 14 | 15 |
| 0 to 15 | 0 to 3 | $W^{(1)}_{2i_{1,1}+2,2i_{1,2},0}$ | $W^{(1)}_{2i_{1,1}+2,2i_{1,2},1}$ | $W^{(1)}_{2i_{1,1}+2,2i_{1,2},2}$ | $W^{(1)}_{2i_{1,1}+2,2i_{1,2},3}$ | $W^{(1)}_{2i_{1,1}+3,2i_{1,2},0}$ | $W^{(1)}_{2i_{1,1}+3,2i_{1,2},1}$ | $W^{(1)}_{2i_{1,1}+3,2i_{1,2},2}$ | $W^{(1)}_{2i_{1,1}+3,2i_{1,2},3}$ |
| 0 to 15 | 0 to 3 | $i_2$ | | | | | | | |
| | | 16 | 17 | 18 | 19 | 20 | 21 | 22 | 23 |
| 0 to 15 | 0 to 3 | $W^{(1)}_{2i_{1,1},2i_{1,2}+1,0}$ | $W^{(1)}_{2i_{1,1},2i_{1,2}+1,1}$ | $W^{(1)}_{2i_{1,1},2i_{1,2}+1,2}$ | $W^{(1)}_{2i_{1,1},2i_{1,2}+1,3}$ | $W^{(1)}_{2i_{1,1}+1,2i_{1,2}+1,0}$ | $W^{(1)}_{2i_{1,1}+1,2i_{1,2}+1,1}$ | $W^{(1)}_{2i_{1,1}+1,2i_{1,2}+1,2}$ | $W^{(1)}_{2i_{1,1}+1,2i_{1,2}+1,3}$ |
| 0 to 15 | 0 to 3 | $i_2$ | | | | | | | |
| | | 24 | 25 | 26 | 27 | 28 | 29 | 30 | 31 |
| 0 to 15 | 0 to 3 | $W^{(1)}_{2i_{1,1}+2,2i_{1,2}+1,0}$ | $W^{(1)}_{2i_{1,1}+2,2i_{1,2}+1,1}$ | $W^{(1)}_{2i_{1,1}+2,2i_{1,2}+1,2}$ | $W^{(1)}_{2i_{1,1}+2,2i_{1,2}+1,3}$ | $W^{(1)}_{2i_{1,1}+3,2i_{1,2}+1,0}$ | $W^{(1)}_{2i_{1,1}+3,2i_{1,2}+1,1}$ | $W^{(1)}_{2i_{1,1}+3,2i_{1,2}+1,2}$ | $W^{(1)}_{2i_{1,1}+3,2i_{1,2}+1,3}$ |

where $W^{(1)}_{l,m,n} = \dfrac{1}{\sqrt{P}}\begin{bmatrix} v_{l,m} \\ \varphi_n v_{l,m} \end{bmatrix}$

In this case, 1 is separately $2i_{1,1}$, $2i_{1,1}+1$, $2i_{1,1}+2$, and $2i_{1,1}+3$. There are sixteen W1 in the horizontal dimension, and there are four precoding vectors with a spacing of $2\pi/32$ in one W1.

It should be noted that, there may be more than four beams after combining beams in the horizontal dimension and the vertical dimension, an example in which there are four beams in a horizontal W1 and there are two beams in a vertical W1 is used, and there are eight beams in total after combination. Therefore, to reduce feedback overheads, Codebook-Config is configured to select four or fewer beams in the eight beams. For example, when Codebook-Config is configured as config1, a selected W1 includes a group of a horizontal beam with a minimum subscript and a vertical beam with a minimum subscript after combination. When Codebook-Config is configured as config2, 3, and 4, a beam location is selected based on each config, to select four beams from the eight beams to form W1.

For example, there are eight beams in W1, as shown in Table 12-1 below:

**Table 12-1**

| 0,1 | 1,1 | 2,1 | 3,1 |
|-----|-----|-----|-----|
| 0,0 | 1,0 | 2,0 | 3,0 |

When Codebook-Config is configured as config1, the beam (0,0) is selected. When Codebook-Config is configured as config2, selected beams are shown by gray parts in Table 12-2. When Codebook-Config is configured as config3, selected beams are shown by gray parts in Table 12-3. When Codebook-Config is configured as config4, selected beams are shown by gray parts in Table 12-4.

**Table 12-2**

| 0,1 | 1,1 | 2,1 | 3,1 |
|-----|-----|-----|-----|
| 0,0 | 1,0 | 2,0 | 3,0 |

**Table 12-3**

| 0,1 | 1,1 | 2,1 | 3,1 |
|-----|-----|-----|-----|
| 0,0 | 1,0 | 2,0 | 3,0 |

**Table 12-4**

| 0,1 | 1,1 | 2,1 | 3,1 |
|-----|-----|-----|-----|
| 0,0 | 1,0 | 2,0 | 3,0 |

It should be noted that, W1 may be selected from all beams formed in the two dimensions. The foregoing Table 11-1 to Table 11-4 list all possible selections, and this is equivalent to a union set of a plurality of types of Codebook-Config configuration. In actual use, these tables may be split into a subset based on a selected beam, to form a codebook for use.

In addition, for $i_{1,1}$ or $i_{1,2}$ in the table and a relationship between $i_1$ and a subscript of W in case of an 8T/4T codebook, refer to the foregoing corresponding table. A relationship between $i_2$ and the subscript of W is not limited to the listed correspondence. To be specific, a value of $i_2$ is not necessarily corresponding to the listed beam, provided that one value of $i_2$ corresponds to one beam and one polarization phase. For example, the foregoing Table 11-1 may be changed to Table 11-1' below:

**Table 11-1'**

| $i_{1,1}$ | $i_{1,2}$ | $i_2$ | | | | | | | |
|---|---|---|---|---|---|---|---|---|---|
| | | 0 | 1 | 2 | 3 | 16 | 17 | 18 | 19 |
| 0 | 0 to 3 | $W^{(1)}_{i_{1,1},2i_{1,2},0}$ | $W^{(1)}_{i_{1,1},2i_{1,2},1}$ | $W^{(1)}_{i_{1,1},2i_{1,2},2}$ | $W^{(1)}_{i_{1,1},2i_{1,2},3}$ | $W^{(1)}_{i_{1,1}+8,2i_{1,2},0}$ | $W^{(1)}_{i_{1,1}+8,2i_{1,2},1}$ | $W^{(1)}_{i_{1,1}+8,2i_{1,2},2}$ | $W^{(1)}_{i_{1,1}+8,2i_{1,2},3}$ |
| 0 | 0 to 3 | $i_2$ | | | | | | | |
| | | 4 | 5 | 6 | 7 | 20 | 21 | 22 | 23 |
| 0 | 0 to 3 | $W^{(1)}_{i_{1,1}+16,2i_{1,2},0}$ | $W^{(1)}_{i_{1,1}+16,2i_{1,2},1}$ | $W^{(1)}_{i_{1,1}+16,2i_{1,2},2}$ | $W^{(1)}_{i_{1,1}+16,2i_{1,2},3}$ | $W^{(1)}_{i_{1,1}+24,2i_{1,2},0}$ | $W^{(1)}_{i_{1,1}+24,2i_{1,2},1}$ | $W^{(1)}_{i_{1,1}+24,2i_{1,2},2}$ | $W^{(1)}_{i_{1,1}+24,2i_{1,2},3}$ |
| 0 | 0 to 3 | $i_2$ | | | | | | | |
| | | 8 | 9 | 10 | 11 | 24 | 25 | 26 | 27 |
| 0 | 0 to 3 | $W^{(1)}_{i_{1,1},2i_{1,2}+1,0}$ | $W^{(1)}_{i_{1,1},2i_{1,2}+1,1}$ | $W^{(1)}_{i_{1,1},2i_{1,2}+1,2}$ | $W^{(1)}_{i_{1,1},2i_{1,2}+1,3}$ | $W^{(1)}_{i_{1,1}+8,2i_{1,2}+1,0}$ | $W^{(1)}_{i_{1,1}+82i_{1,2}+1,1}$ | $W^{(1)}_{i_{1,1}+8,2i_{1,2}+1,2}$ | $W^{(1)}_{i_{1,1}+8,2i_{1,2}+1,3}$ |
| 0 | 0 to 3 | $i_2$ | | | | | | | |
| | | 12 | 13 | 14 | 15 | 28 | 29 | 30 | 31 |
| 0 | 0 to 3 | $W^{(1)}_{i_{1,1}+16,2i_{1,2}+1,0}$ | $W^{(1)}_{i_{1,1}+16,2i_{1,2}+1,1}$ | $W^{(1)}_{i_{1,1}+16,2i_{1,2}+1,2}$ | $W^{(1)}_{i_{1,1}+16,2i_{1,2}+1,3}$ | $W^{(1)}_{i_{1,1}+24,2i_{1,2}+1,0}$ | $W^{(1)}_{i_{1,1}+24,2i_{1,2}+1,1}$ | $W^{(1)}_{i_{1,1}+24,2i_{1,2}+1,2}$ | $W^{(1)}_{i_{1,1}+24,2i_{1,2}+1,3}$ |

where $W^{(1)}_{l,m,n} = \dfrac{1}{\sqrt{P}} \begin{bmatrix} v_{l,m} \\ \varphi_n v_{l,m} \end{bmatrix}$

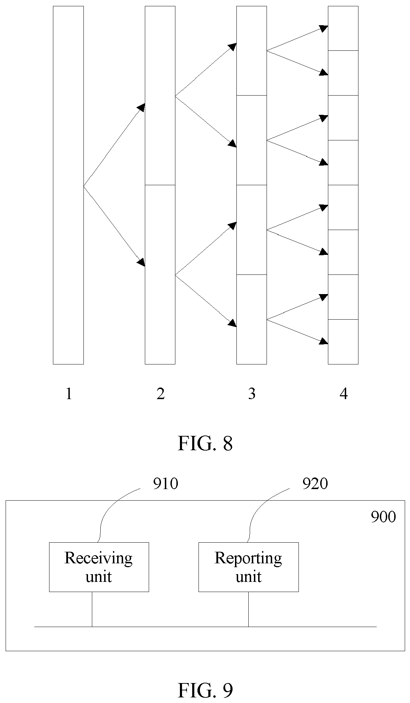

The foregoing multi-stage codebook structure may be applied to long-term/short-term feedback and wideband/narrowband feedback. For long-term/short-term feedback, refer to the foregoing procedure. Multi-stage feedback is performed by using a plurality of time units. For wideband/narrowband feedback, refer to FIG. 8. FIG. 8 is a schematic diagram of a plurality of types of bandwidths according to an embodiment of this application. The time unit herein is a transmission unit in time domain, for example, may be a slot or a subframe.

As shown in FIG. 8, in case of four bandwidth granularities, frequency domain ranges of four types of bandwidths may be notified by the RAN node to user equipment or may be predefined (for example, agreed in a protocol). For example, the RAN node notifies the terminal of a to-be-used system bandwidth by using higher layer signaling (for example, RRC signaling) or physical layer signaling (for example, DCI).

The four types of bandwidths in FIG. 8 are used as an example. The RAN node sends DCI to the terminal. The DCI indicates that a bandwidth size allocated to the terminal is a bandwidth 1. For example, the bandwidth 1 includes a plurality of frequency domain resources, and a size of one frequency domain resource may be one resource block (Resource block, RB) or one RB pair. The bandwidth 1 may be divided at a finer granularity to obtain a bandwidth 2, a bandwidth 3, and a bandwidth 4. There may be a granularity correspondence between the bandwidth 1 and the bandwidths 2 to 4. For example, the correspondence is shown in Table 11. The terminal may determine the bandwidths 2 to 4 based on the table.

**Table 11**

| Bandwidth 1, Wd1 | Bandwidth 2, Wd2 | Bandwidth 3, Wd3 | Bandwidth 4, Wd4 |
|---|---|---|---|
| Range 1 | $Wd2_1$ | $Wd3_1$ | $Wd4_1$ |
| Range 2 | $Wd2_2$ | $Wd3_2$ | $Wd4_2$ |
| ... | ... | ... | ... |
| Range n | $Wd2_n$ | $Wd3_n$ | $Wd4_n$ |

In this way, when the RAN node configures the bandwidth 1 for the terminal, the sizes of the bandwidths 2 to 4 can be determined by querying the foregoing table based on a size of the bandwidth 1. For example, if the bandwidth 1 configured by the RAN node includes 24 RBs and falls within the range 2, the size of the bandwidth 2 is $Wd2_2$, the size of the bandwidth 3 is $Wd3_2$, and the size of the bandwidth 4 is $Wd4_2$.

A measurement and reporting mode corresponding to the multi-stage codebook is as follows: The bandwidth 1 has a largest bandwidth, and a first-stage codebook with lowest precision is used on the bandwidth 1. The bandwidth 1 is divided into several smaller bandwidths, namely, bandwidths 2, and a second-stage codebook is used on the bandwidth 2. The bandwidth 2 may be further divided into smaller bandwidths, namely, bandwidths 3, and a third-stage codebook is used on the bandwidth 3. The rest may be obtained by analogy.

Three stages are used as an example. Assuming that a codebook with first precision is used on the bandwidth 1, the terminal measures and reports information about the codebook with the first precision on the frequency domain resource on the bandwidth 1. Assuming that a codebook with second precision is used on the bandwidth 2, the terminal measures and reports information about the codebook with the second precision on a frequency domain resource on the bandwidth 2. A frequency domain resource location on the bandwidth 2 may be configured by the RAN node for the terminal. Alternatively, the terminal selects a frequency domain resource location, and the terminal reports, to the RAN node, a frequency domain resource location that the terminal considers to have good channel quality. There may be one or more frequency domain resources on the bandwidth 2 that correspond to the information that is about the codebook with the second precision and that is measured and reported by the terminal. Therefore, there may also be one or more pieces of reported information about the codebook with the second precision. Information that is about the codebook with the second precision and that is measured on each frequency domain resource on the bandwidth 2 is measured based on the information about the codebook that is with the first precision and that is used on the bandwidth 1 such as the system bandwidth. An association or correspondence between codebook information on the bandwidth 1 and codebook information on the bandwidth 2 is similar to that in the foregoing embodiment. Assuming that a codebook with third precision is used on the bandwidth 3, the terminal measures and reports information about the codebook with the third precision on a frequency domain resource on the bandwidth 3. There may be one or more frequency domain resources on the bandwidth 3 that correspond to the information that is about the codebook with the third precision and that is measured and reported by the terminal. Therefore, there may also be one or more pieces of reported information about the codebook with the third precision. The bandwidth 3 is, for example, a sub-band, and codebook information on the sub-band is measured based on codebook information on a bandwidth 2 that includes the sub-band.

In this way, the terminal reports one piece of information that is about the codebook with the first precision and that is on the bandwidth 1, one or more pieces of information that is about the codebook with the second precision and that is on the bandwidth 2, and one or more pieces of information that is about the codebook with the third precision and that is on the bandwidth 3. If the terminal does not receive the frequency domain location that is on the bandwidth 2 or the bandwidth 3 and that is indicated by the RAN node, and the RAN instructs the terminal to report a frequency domain location that the terminal considers to be the best and/or a quantity of frequency domain locations that the terminal considers to be the best, the terminal reports a frequency domain location that is on the bandwidth 2 or the bandwidth 3 and that corresponds to a measured codebook.

The correspondence between a bandwidth and codebook precision is only an example, and may be specifically set as required, and higher codebook precision is used for a finer bandwidth granularity. During implementation, a correspondence between codebook precision and a used bandwidth may be configured. Lower codebook precision is used for a larger band width, higher codebook precision is used for a smaller bandwidth, and codebook information is obtained through search at a plurality of stages in descending order of bandwidths. The four stages herein are only an example. During implementation, a correspondence based on two stages, three stages, or more stages may be configured.

In this embodiment, a relationship between a multi-stage codebook and a bandwidth is limited, so that codebook information on a low bandwidth can be obtained through continuous search, overheads can be reduced, and high-bandwidth performance can be improved.

Referring to the following embodiments, the method in the foregoing embodiment of this application may be further used in a scenario with different antenna ports.

The RAN node performs beamforming on an antenna by using a precoding matrix, so that at least one beam can be formed in space, and energy is aggregated in a specific direction. Generally, a larger quantity of antenna ports that form a beam indicates a finer granularity of the formed beam in space domain and more aggregated energy. Therefore, in this embodiment of this application, a beam granularity may be increased by increasing a quantity of antenna ports.

The RAN node configures an array structure formed by a plurality of antenna elements, for example, an antenna array formed by 64 antenna elements. For precision of a first-stage codebook, the 64 antenna elements are virtualized to two antenna ports, and the terminal performs feedback based on a 2T codebook. For precision of a second-stage codebook, the 64 antenna elements are virtualized to four antenna ports, and the terminal performs feedback based on a 4T codebook. For precision of a third-stage codebook, the 64 antenna elements are virtualized to eight antenna ports, and the terminal performs feedback based on an 8T codebook. The rest may be obtained by analogy. Herein, each stage may be a one-dimensional cross polarization linear array, or may be a two-dimensional cross polarization plane. For antenna elements in one polarization direction in one dimension such as a horizontal dimension or a vertical dimension, a quantity of the elements corresponding to precision at a higher stage is not less than a quantity of elements corresponding to precision at a previous stage. In this way, beams formed by different quantities of antenna elements have different widths.

For precision of an $x^{th}$-stage codebook, a DFT vector $v_x$ that is fed back is as follows:

$$v_x = \begin{bmatrix} 1 \\ e^{j\theta_x} \\ \vdots \\ e^{j(N_x-1)\theta_x} \end{bmatrix}_{N_x \times 1}$$

An angle of the vector is $\theta_x$. For $(x+1)^{th}$-stage precision, a range in which the terminal performs measurement and feedback is limited to a vector whose direction is $\theta_x \pm \Delta\theta$ in a codebook, for example, $v_{x+1} \in C_{x+1}, \theta_x - \Delta\theta \leq \theta_{x+1} \leq \theta_x + \Delta\theta$.

$N_x$ is a quantity of antenna ports of the $x^{th}$-stage codebook in one polarization direction in one dimension, the $x^{th}$-stage codebook has RI precoding vectors, and a dimension of each vector is $N_x * 1$. $v_x$ is a precoding vector at the $x^{th}$ stage, and an angle of the precoding vector in space is $\theta_x$. $v_{x+1}$ is a precoding vector at the $(x+1)^{th}$ stage, and an angle of the precoding vector in space is $\theta_{x+1}$. These are obtained through measurement. A precoding vector herein is a vector used in one polarization direction in one dimension (horizontal or vertical dimension). There is a polarization factor between polarization directions. A reporting manner of the polarization factor is similar to that in the foregoing embodiment, and the polarization factor and a codebook index may be reported together or separately. Two dimensions are combined by using a Kronecker (Kronecker) product of precoding vectors in the two dimensions. If $\theta_{x+1} = \theta_x$, because there are more antenna ports at the $(x+1)^{th}$ stage and a beam of the antenna port is slimmer, a search range is configured as $\theta_x \pm \Delta\theta$. The terminal performs measurement and reporting based on the configured search range and the angles of the vectors reported at the $(x+1)^{th}$ stage and the $x^{th}$ stage. Herein, $\Delta\theta$ may be configured by the RAN node. In this embodiment, codebook precision is an angle difference between precoding vectors or a width of a space-domain directivity pattern of a precoding vector, for example, angle spread.

It should be noted that, the codebooks with the first-stage precision, the second-stage precision, and the like in this embodiment do not have a correspondence with the first-stage precision to the fourth-stage precision in the foregoing embodiment. Herein, "first" and "second" only indicate that the codebook precision is increased, and a specific value of the precision is not limited. For example, the codebook with the first-stage precision may have precision of $2\pi/32$.

Specifically, it is assumed that the antenna forms M panels, and there are two dimensions on each panel: a horizontal dimension and a vertical dimension that are denoted as v and h. A quantity of antenna ports on one panel is $N_v \times N_h$, $N_v$ represents a quantity of antenna ports in the horizontal dimension, and $N_h$ represents a quantity of antenna ports in the vertical dimension. There are $N_v \times N_h \times M$ antenna ports in total. The precoding vector may be expressed as:

$$W^T = W_{panel}^T \cdot W_3 \cdot W_4$$

$W_{panel} = W_1 \cdot W_2$, and $W_{panel}$ is a precoding matrix corresponding to the first-stage precision. The precoding matrix is obtained by measuring antenna ports of one panel. The first-stage precision is, for example, $2\pi/32$. The precoding matrix $W_{panel}$ may be obtained by using the foregoing multi-stage precision, or may be determined in an existing precoding matrix determining manner. No limitation is imposed herein.

W3 and W4 are precoding matrices corresponding to the second-stage precision and the third-stage precision. Precoding vector measurement is performed at the second stage by using two panels, and precoding vector measurement is performed at the third stage by using four panels:

$$W_3 = \begin{bmatrix} R_{N_h,\theta_h} \otimes R_{N_v,\theta_v} & e^{j\varphi_1} R_{N_h,\theta_h} \otimes R_{N_v,\theta_v} \end{bmatrix}$$

$$W_4 = \begin{bmatrix} R_{2N_h,\theta_h'} \otimes R_{2N_v,\theta_v'} & e^{j\varphi_1} R_{2N_h,\theta_h'} \otimes R_{2N_v,\theta_v'} \end{bmatrix}.$$

$R_{N_i,\theta_i}$ is a phase rotation matrix and physically means $\Delta\theta$, and i=v or h:

$$R_{N_i,\theta_i} = \begin{bmatrix} 1 & 0 & \cdots & 0 \\ 0 & e^{j\frac{2\pi\theta_i}{N_iO_i}} & \cdots & 0 \\ \vdots & \vdots & \ddots & \vdots \\ 0 & 0 & 0 & e^{j\frac{2\pi(N_i-1)\theta_i}{N_iO_i}} \end{bmatrix}_{N_i \times N_i},$$

where

$i=v$ or $h$ respectively represents the horizontal dimension and the vertical dimension, $N_i$ is a quantity of antennas in a dimension i, and the matrix R is specifically described above.

In this embodiment, the RAN node sends measurement configuration information to the terminal. The measurement configuration information is used to configure the terminal to measure a channel. The terminal measures the channel based on the configuration information, to obtain codebook information. The terminal reports the codebook information to the RAN node. The codebook information includes phase information, and the phase information is used to indicate a phase difference (or referred to as phase rotation) between submatrices of a precoding matrix. The RAN node determines the precoding matrix based on the phase information reported by the terminal.

The measurement configuration information is used to configure measurement and reporting of precoding matrices of a plurality of antenna panels. For example, the measurement configuration information may include a quantity of panels corresponding to the phase information or a quantity of submatrices corresponding to the phase information.

In addition, the measurement configuration information may further include other parameters, for example, a quantity of antenna panels, a quantity of antenna elements, a reporting period, and a reporting trigger condition. This is not used to limit this application, and details are not described herein.

Optionally, the phase information includes phase information at a plurality of stages, and the phase information at the plurality of stages may be reported separately or together. Phase information at different stages corresponds to different quantities of submatrices (or antenna panels).

For example, the phase information includes second-stage phase information, and the second-stage phase information is used to indicate a phase difference between two submatrices and the other two submatrices. Third-stage phase information is used to indicate a phase difference between one submatrix and the other submatrices.

Optionally, a phase of one submatrix may be set to an initial phase, and the initial phase is, for example, 0. Alternatively, a phase of another panel may be fixed to an initial phase. A value of the initial phase may be 0, or may be another value. The value may be configured by the RAN node, or may be preconfigured. In this case, overheads may be reduced.

Four panels are used as an example. It is assumed that there are two antenna ports in total for one panel, for example, $N_v$=2 and $N_h$=1. A 1-layer codebook may be expressed as follows: $W_{panel} = \begin{bmatrix} 1 \\ e^{j\theta_{s(1)}} \end{bmatrix}$ is a precoding

matrix corresponding to two antenna ports of one panel. $W_3 = \begin{bmatrix} e^{j\theta_{s(2),p(1,2)}} & 0 & 0 & 0 \\ 0 & e^{j\theta_{s(2),p(1,2)}} & 0 & 0 \\ 0 & 0 & e^{j\theta_{s(2),p(3,4)}} & 0 \\ 0 & 0 & 0 & e^{j\theta_{s(2),p(3,4)}} \end{bmatrix}$ is a

second-stage precoding matrix, where same phase rotation is used for a first panel and a second panel and same phase rotation is used for a third panel and a fourth panel. $W_4 = \begin{bmatrix} e^{j\theta_{s(2),p(1)}} & 0 & 0 & 0 \\ 0 & e^{j\theta_{s(2),p(1)}} & 0 & 0 \\ 0 & 0 & e^{j\theta_{s(2),p(3)}} & 0 \\ 0 & 0 & 0 & e^{j\theta_{s(2),p(4)}} \end{bmatrix}$ is a third-stage precoding matrix, where there are four phase rotation values respectively for the first panel, the second panel, the third panel, and the fourth panel.

Further, to reduce overheads, a phase of one of the four panels may be fixed to the initial phase, for example, a phase of the first panel is fixed to 0. In this way, reported information corresponding to the second-stage precoding matrix includes phase rotation between a submatrix corresponding to two panels and a submatrix corresponding to the other two panels. In this case, the phase information measured or reported by the terminal is a phase difference between a submatrix corresponding to the third panel and the fourth panel and a submatrix corresponding to the first panel and the second panel. $W_3 = \begin{bmatrix} 1 & 0 & 0 & 0 \\ 0 & 1 & 0 & 0 \\ 0 & 0 & e^{j\theta_{s(2),p(3,4)}} & 0 \\ 0 & 0 & 0 & e^{j\theta_{s(2),p(3,4)}} \end{bmatrix}$ is the second-stage precoding matrix, where same phase rotation is used for the first panel and the second panel and same phase rotation is used for the third panel and the fourth panel.

Reported information corresponding to the third-stage precoding matrix includes phase rotation between submatrices corresponding to three panels and a submatrix corresponding to the other one panel. In this case, the phase information measured or reported by the terminal includes a phase difference between a submatrix corresponding to the second panel and a submatrix corresponding to the first panel, a phase difference between a submatrix corresponding to the third panel and the submatrix corresponding to the first panel, and a phase difference between a submatrix corresponding to the fourth panel and the submatrix corresponding to the first panel.

$W_4 = \begin{bmatrix} 1 & 0 & 0 & 0 \\ 0 & e^{j\theta_{s(2),p(1)}} & 0 & 0 \\ 0 & 0 & e^{j\theta_{s(2),p(3)}} & 0 \\ 0 & 0 & 0 & e^{j\theta_{s(2),p(4)}} \end{bmatrix}$ is the third-stage precoding matrix, where there are four phase rotation values respectively for the first panel, the second panel, the third panel, and the fourth panel.

The methods described in the foregoing embodiment may be implemented by using a communications apparatus. The communications apparatus is located in a terminal, and includes units that perform steps in any method performed by the foregoing terminal, to implement any method performed by the terminal in the foregoing method embodiment. Alternatively, the communications apparatus is located in a RAN node, and includes units that performs steps in any method performed by the foregoing RAN node, to implement any method performed by the RAN node in the foregoing method embodiment.

FIG. 9 is a schematic diagram of a communications apparatus according to an embodiment of this application. As shown in FIG. 9, the communications apparatus 900 is applied to a terminal, and includes a receiving unit 910 and a reporting unit 920. The receiving unit 910 is configured to receive configuration information from a RAN node, where the configuration information is used to configure precision of a multi-stage codebook, and codebook precision at different stages is different. The reporting unit 920 is configured to perform reporting for codebook information based on the configuration information, where information about an $M^{th}$-stage codebook limits a range of an $(M+1)^{th}$-stage codebook, and M is a positive integer and is less than a codebook stage quantity.

Descriptions in the foregoing method embodiment may be applied to the apparatus embodiment. For example, descriptions of the codebook information, content in the information that is about the codebook and reported by the terminal, the configuration information, an implementation in which the information about the $M^{th}$-stage codebook limits the range of the $(M+1)^{th}$-stage codebook, and reporting for the codebook information are the same as those in the foregoing embodiment, and details are not described again.

It should be understood that, division of the units in the foregoing communications apparatus is only logical function division. In actual implementation, all or some of the units may be integrated into one physical entity, or the units may be physically separated. In addition, the units may be all implemented in a form of invoking software by using a processing element, or may be all implemented in a form of hardware; or some units may be implemented in a form of invoking software by using a processing element, and some units may be implemented in a form of hardware. For example, the reporting unit may be a processing element disposed separately, or may be integrated into a chip of the terminal for implementation. In addition, the reporting unit may be stored in a memory of the terminal in a form of a program and invoked by a processing element of the terminal, to perform a function of the reporting unit. Implementation of another unit is similar to this. The terminal may receive, through an antenna, information sent by the RAN node. The information is processed and sent by a radio frequency apparatus to a baseband apparatus. The receiving unit may receive, through an interface between the radio frequency apparatus and the baseband apparatus, the information sent by the RAN node. In addition, the units in the communications apparatus may be all or partially integrated together, or may be separately implemented. The processing element herein may be an integrated circuit having a signal processing capability. In an implementation process, steps in the foregoing method or the foregoing units may be implemented by using a hardware integrated logic circuit in the processing element or by using instructions in a form of software.

For example, the foregoing units may be configured as one or more integrated circuits that implement the foregoing method, for example, one or more application-specific integrated circuits (Application Specific Integrated Circuit, ASIC), one or more microprocessors (digital signal processor, DSP), or one or more field programmable gate arrays (Field Programmable Gate Array, FPGA). For another example, when one of the units is implemented in a form of invoking a program by using a processing element, the processing element may be a general purpose processor, for example, a central processing unit (Central Processing Unit, CPU) or another processor that can invoke the program. For another example, the units may be integrated together and implemented in a form of a system-on-a-chip (system-on-a-chip, SOC).

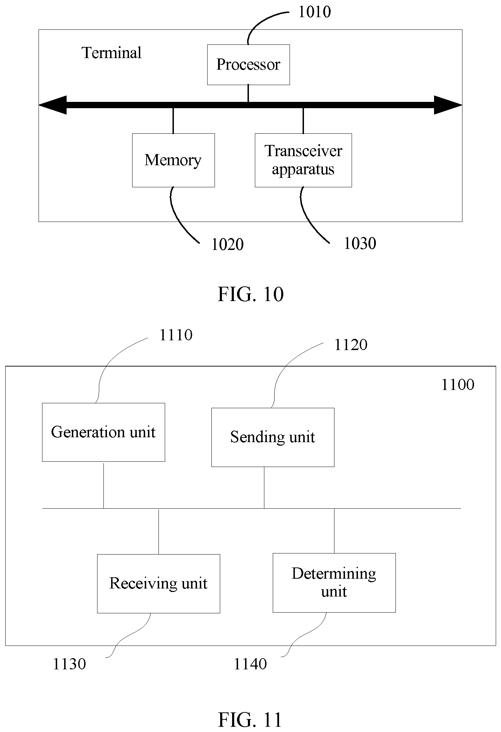

FIG. 10 is a schematic diagram of a terminal according to an embodiment of this application. As shown in FIG. 10, the terminal includes a processor 1010, a memory 1020, and a transceiver apparatus 1030. The transceiver apparatus 1030 may be connected to an antenna. In a downlink direction, the transceiver apparatus 1030 receives, through the antenna, information sent by a RAN node, and sends the information to the processor 1010 for processing. In an uplink direction, the processor 1010 processes data of the terminal, and sends the data to the RAN node through the transceiver apparatus 1030.

The memory 1020 is configured to store a program that implements any method performed by the terminal in the foregoing method embodiment. The processor 1010 invokes the program to perform an operation in the foregoing method embodiment, to implement each unit shown in FIG. 9.

Alternatively, the foregoing units may be all or partially implemented in a form of an integrated circuit that is embedded in a chip of the terminal. In addition, the units may be separately implemented, or may be integrated together. To be specific, the foregoing units may be configured as one or more integrated circuits that implement the foregoing method, for example, one or more ASICs, one or more DSPs, or one or more FPGAs.

FIG. 11 is a schematic diagram of a communications apparatus according to an embodiment of this application. As shown in FIG. 11, the communications apparatus 1100 is applied to a RAN node, and includes a generation unit 1110, a sending unit 1120, a receiving unit 1130, and a determining unit 1140. The generation unit 1110 is configured to generate configuration information, where the configuration information is used to configure precision of a multi-stage codebook, and codebook precision at different stages is different. The sending unit 1120 is configured to send the configuration information to a terminal, where the configuration information is used by the terminal to perform reporting for codebook information, information about an $M^{th}$-stage codebook limits a range of an $(M+1)^{th}$-stage codebook, and M is a positive integer and is less than a codebook stage quantity. The receiving unit 1130 is configured to receive information that is about a codebook and reported by the terminal. The determining unit 1140 is configured to determine a precoding matrix based on the information that is about the codebook and received by the receiving unit 1130.

Descriptions in the foregoing method embodiment may be applied to the apparatus embodiment. For example, descriptions of the codebook information, content in the information that is about the codebook and received by the RAN node, the configuration information, an implementation in which the information about the $M^{th}$-stage codebook limits the range of the $(M+1)^{th}$-stage codebook, and determining of the precoding matrix are the same as those in the foregoing embodiment, and details are not described again.

It should be understood that, division of the units in the foregoing communications apparatus is only logical function division. In actual implementation, all or some of the units may be integrated into one physical entity, or the units may be physically separated. In addition, the units may be all implemented in a form of invoking software by using a processing element, or may be all implemented in a form of hardware; or some units may be implemented in a form of invoking software by using a processing element, and some units may be implemented in a form of hardware. For example, the generation unit may be a processing element disposed separately, or may be integrated into a chip of the RAN node for implementation. In addition, the generation unit may be stored in a memory of the RAN node in a form of a program and invoked by a processing element of the RAN node, to perform a function of the generation unit. Implementation of another unit is similar to this. It should be noted that, the receiving unit and the sending unit may communicate with the terminal through a radio frequency apparatus and an antenna. For example, the sending unit may send information to the terminal through the antenna after the information is processed by the radio frequency apparatus. The RAN node may receive, through the antenna, information sent by the terminal, process the received information through the radio frequency apparatus, and then send the information to the receiving unit. In addition, the units in the communications apparatus may be all or partially integrated together, or may be separately implemented. The processing element herein may be an integrated circuit having a signal processing capability. In an implementation process, steps in the foregoing method or the foregoing units may be implemented by using a hardware integrated logic circuit in the processing element or by using instructions in a form of software.

For example, the foregoing units may be configured as one or more integrated circuits that implement the foregoing method, for example, one or more application-specific integrated circuits (Application Specific Integrated Circuit, ASIC), one or more microprocessors (digital signal processor, DSP), or one or more field programmable gate arrays (Field Programmable Gate Array, FPGA). For another example, when one of the units is implemented in a form of invoking a program by using a processing element, the processing element may be a general purpose processor, for example, a central processing unit (Central Processing Unit, CPU) or another processor that can invoke the program.

For another example, the units may be integrated together and implemented in a form of a system-on-a-chip (system-on-a-chip, SOC).

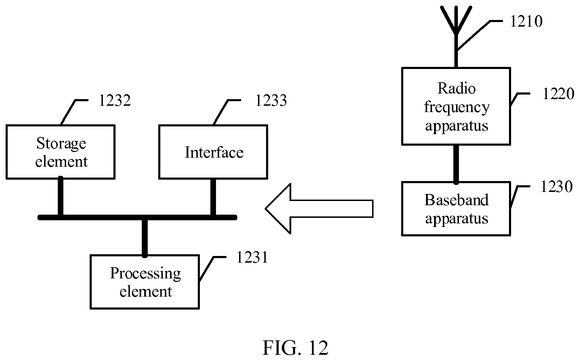

FIG. 12 is a schematic structural diagram of a RAN node according to an embodiment of this application. As shown in FIG. 12, the RAN node includes an antenna 1210, a radio frequency apparatus 1220, and a baseband apparatus 1230. The antenna 1210 is connected to the radio frequency apparatus 1220. In an uplink direction, the radio frequency apparatus 1220 receives, through the antenna 1210, information sent by a terminal, and sends, to the baseband apparatus 1230 for processing, the information sent by the terminal. In a downlink direction, the baseband apparatus 1230 processes information of the terminal, and sends the information to the radio frequency apparatus 1220. The radio frequency apparatus 1220 processes the information of the terminal, and then sends the information to the terminal through the antenna 1210.

The foregoing communications apparatus may be located in the baseband apparatus 1230. In an implementation, the foregoing units are implemented in a form of invoking a program by using a processing element. For example, the baseband apparatus 1230 includes a processing element 1231 and a storage element 1232, and the processing element 1231 invokes a program stored in the storage element 1232, to perform the method in the foregoing method embodiment. In addition, the baseband apparatus 1230 may further include an interface 1233, configured to exchange information with the radio frequency apparatus 1220. The interface is, for example, a common public radio interface (common public radio interface, CPRI).

In another implementation, the foregoing units may be configured as one or more processing elements that implement the foregoing method. These processing elements are disposed on the baseband apparatus 1230. The processing element herein may be an integrated circuit, for example, one or more ASICs, one or more DSPs, or one or more FPGAs. These integrated circuits may be integrated together to form a chip.

For example, the foregoing units may be integrated together in a form of a system-on-a-chip (system-on-a-chip, SOC). For example, the baseband apparatus 1230 includes an SOC chip, configured to implement the foregoing method.

Same as that in the foregoing descriptions, the processing element herein may be a general purpose processor, for example, a central processing unit (Central Processing Unit, CPU), or may be configured as one or more integrated circuits that implement the foregoing method, for example, one or more application-specific integrated circuits (Application Specific Integrated Circuit, ASIC), one or more microprocessors (digital signal processor, DSP), or one or more field programmable gate arrays (Field Programmable Gate Array, FPGA).

The storage element may be a memory, or may be a general name for a plurality of storage elements.

Persons of ordinary skill in the art may understand that all or some of the steps of the method embodiments may be implemented by a program instructing relevant hardware. The program may be stored in a computer readable storage medium. When the program runs, the steps in the method embodiments are performed. The foregoing storage medium includes: any medium that can store program code, such as a ROM, a RAM, a magnetic disk, or an optical disc.

Finally, it should be noted that, the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

**Claims**

1. A communication method, comprising:

   receiving, by a terminal, configuration information from a radio access network RAN node, wherein the configuration information is used to configure precision of a multi-stage codebook, and codebook precision at different stages is different; and

   performing, by the terminal, reporting for codebook information based on the configuration information, wherein information about an $M^{th}$-stage codebook limits a range of an $(M+1)^{th}$-stage codebook, and M is a positive integer and is less than a codebook stage quantity.

2. The method according to claim 1, wherein the codebook information comprises a first codebook index and a second codebook index, the first codebook index is used to select a vector group, the vector group comprises a plurality of precoding vectors that reflect a long-term or wideband channel feature, the second codebook index is used to select a precoding vector from a vector group selected by using a first codebook index of information about a codebook at a same stage, and the precoding vector reflects a short-term or narrowband channel feature; and

information that is about a first-stage codebook and that is reported by the terminal comprises a first codebook index and a second codebook index, or comprises a second codebook index; and information that is about a second-stage codebook and a higher-stage codebook and that is reported by the terminal comprises a second codebook index.

3. The method according to claim 2, wherein that information about an $M^{th}$-stage codebook limits a range of an $(M+1)^{th}$-stage codebook comprises the following:

   a second codebook index of the information about the $M^{th}$-stage codebook limits a value of a first codebook index of information about the $(M+1)^{th}$-stage codebook; or
   a first codebook index and a second codebook index that are of the information about the $M^{th}$-stage codebook limit a value of a first codebook index of information about the $(M+1)^{th}$-stage codebook.

4. The method according to claim 2 or 3, wherein the first codebook index and the second codebook index that are of the information about the first-stage codebook are reported together or are separately reported.

5. The method according to any one of claims 2 to 4, wherein the first codebook index comprises a horizontal-dimension codebook index and a vertical-dimension codebook index.

6. The method according to claim 5, wherein that information about an $M^{th}$-stage codebook limits a range of an $(M+1)^{th}$-stage codebook comprises the following:

   the second codebook index of the information about the $M^{th}$-stage codebook limits a value of a horizontal-dimension codebook index of the information about the $(M+1)^{th}$-stage codebook; or a horizontal-dimension codebook index and the second codebook index that are of the information about the $M^{th}$-stage codebook limit a value of a horizontal-dimension codebook index of the information about the $(M+1)^{th}$-stage codebook; or
   the second codebook index of the information about the $M^{th}$-stage codebook limits a value of a vertical-dimension codebook index of the information about the $(M+1)^{th}$-stage codebook; or a vertical-dimension codebook index and the second codebook index that are of the information about the $M^{th}$-stage codebook limit a value of a vertical-dimension codebook index of the information about the $(M+1)^{th}$-stage codebook; or
   the second codebook index of the information about the $M^{th}$-stage codebook limits a value of a horizontal-dimension codebook index and a value of a vertical-dimension codebook index that are of the information about the $(M+1)^{th}$-stage codebook; or a horizontal-dimension codebook index, a vertical-dimension codebook index, and the second codebook index that are of the information about the $M^{th}$-stage codebook limit a value of a horizontal-dimension codebook index and a value of a vertical-dimension codebook index that are of the information about the $(M+1)^{th}$-stage codebook.

7. The method according to any one of claims 1 to 6, wherein partial codebook information in information that is about the multi-stage codebook and that is reported by the terminal comprises polarization phase information, and the polarization phase information is used to select a polarization phase.

8. The method according to claim 7, wherein the polarization phase information is information independent of a codebook index in codebook information that comprises the polarization phase information, or is a part of a codebook index.

9. The method according to claim 7 or 8, wherein the information that is about the first-stage codebook and that is reported by the terminal comprises the polarization phase information; and/or information that is about a highest-stage codebook and that is reported by the terminal comprises the polarization phase information.

10. The method according to any one of claims 1 to 9, wherein the configuration information comprises a codebook parameter, the codebook parameter comprises a plurality of values or indication information of a plurality of values, and each value corresponds to one codebook precision; or
    the configuration information comprises a parameter field, the parameter field is used to indicate a value of a codebook parameter, the codebook parameter has a plurality of values, and each value corresponds to one codebook precision; or
    the configuration information comprises a first configuration message and a second configuration message, the first configuration message comprises a plurality of values or indication information of a plurality of values of a codebook parameter, and the second configuration message is used to indicate a value selected from the plurality of values.

11. The method according to claim 10, wherein the value of the codebook parameter has a preset relationship with a subscript of a precoding matrix.

12. The method according to any one of claims 1 to 11, wherein the performing, by the terminal, reporting for codebook information based on the configuration information comprises:

when the terminal reports the information about the first-stage codebook, determining, by the terminal, precision of the first-stage codebook based on the configuration information, and reporting information about a codebook with the precision of the first-stage codebook; or

when the terminal reports the information about the second-stage codebook and the higher-stage codebook, determining, by the terminal, precision of a current-stage codebook based on the configuration information, determining a range of the current-stage codebook based on information about a previous-stage codebook, and reporting, within the range of the current-stage codebook, information about a codebook with the precision of the current-stage codebook.

13. A communications apparatus, applied to a terminal and comprising:

a receiving unit, configured to receive configuration information from a radio access network RAN node, wherein the configuration information is used to configure precision of a multi-stage codebook, and codebook precision at different stages is different; and

a reporting unit, configured to perform reporting for codebook information based on the configuration information, wherein information about an $M^{th}$-stage codebook limits a range of an $(M+1)^{th}$-stage codebook, and M is a positive integer and is less than a codebook stage quantity.

14. The apparatus according to claim 13, wherein the codebook information comprises a first codebook index and a second codebook index, the first codebook index is used to select a vector group, the vector group comprises a plurality of precoding vectors that reflect a long-term or wideband channel feature, the second codebook index is used to select a precoding vector from a vector group selected by using a first codebook index of information about a codebook at a same stage, and the precoding vector reflects a short-term or narrowband channel feature; and information that is about a first-stage codebook and that is reported by the reporting unit comprises a first codebook index and a second codebook index, or comprises a second codebook index; and information that is about a second-stage codebook and a higher-stage codebook and that is reported by the terminal comprises a second codebook index.

15. The apparatus according to claim 14, wherein that information about an $M^{th}$-stage codebook limits a range of an $(M+1)^{th}$-stage codebook comprises the following:
a second codebook index of the information about the $M^{th}$-stage codebook limits a value of a first codebook index of information about the $(M+1)^{th}$-stage codebook; or a first codebook index and a second codebook index that are of the information about the $M^{th}$-stage codebook limit a value of a first codebook index of information about the $(M+1)^{th}$-stage codebook.

16. The apparatus according to claim 14 or 15, wherein the first codebook index and the second codebook index that are of the information about the first-stage codebook are reported together or are separately reported.

17. The apparatus according to any one of claims 14 to 16, wherein the first codebook index comprises a horizontal-dimension codebook index and a vertical-dimension codebook index.

18. The apparatus according to claim 17, wherein that information about an $M^{th}$-stage codebook limits a range of an $(M+1)^{th}$-stage codebook comprises the following:

the second codebook index of the information about the $M^{th}$-stage codebook limits a value of a horizontal-dimension codebook index of the information about the $(M+1)^{th}$-stage codebook; or a horizontal-dimension codebook index and the second codebook index that are of the information about the $M^{th}$-stage codebook limit a value of a horizontal-dimension codebook index of the information about the $(M+1)^{th}$-stage codebook; or

the second codebook index of the information about the $M^{th}$-stage codebook limits a value of a vertical-dimension codebook index of the information about the $(M+1)^{th}$-stage codebook; or a vertical-dimension codebook index and the second codebook index that are of the information about the $M^{th}$-stage codebook limit a value of a vertical-dimension codebook index of the information about the $(M+1)^{th}$-stage codebook; or

the second codebook index of the information about the $M^{th}$-stage codebook limits a value of a horizontal-dimension codebook index and a value of a vertical-dimension codebook index that are of the information about the $(M+1)^{th}$-stage codebook; or a horizontal-dimension codebook index, a vertical-dimension codebook index, and the second codebook index that are of the information about the $M^{th}$-stage codebook limit a value of a horizontal-dimension codebook index and a value of a vertical-dimension codebook index that are of the information about the $(M+1)^{th}$-stage codebook.

19. The apparatus according to any one of claims 13 to 18, wherein partial codebook information in information that is about the multi-stage codebook and that is reported by the reporting unit comprises polarization phase information, and the polarization phase information is used to select a polarization phase.

20. The apparatus according to claim 19, wherein the polarization phase information is information independent of a codebook index in codebook information that comprises the polarization phase information, or is a part of a codebook index.

21. The apparatus according to claim 19 or 20, wherein the information that is about the first-stage codebook and that is reported by the reporting unit comprises the polarization phase information; and/or information that is about a highest-stage codebook and that is reported by the reporting unit comprises the polarization phase information.

22. The apparatus according to any one of claims 13 to 21, wherein the configuration information comprises a codebook parameter, the codebook parameter comprises a plurality of values or indication information of a plurality of values, and each value corresponds to one codebook precision; or
the configuration information comprises a parameter field, the parameter field is used to indicate a value of a codebook parameter, the codebook parameter has a plurality of values, and each value corresponds to one codebook precision; or
the configuration information comprises a first configuration message and a second configuration message, the first configuration message comprises a plurality of values or indication information of a plurality of values of a codebook parameter, and the second configuration message is used to indicate a value selected from the plurality of values.

23. The apparatus according to claim 22, wherein the value of the codebook parameter has a preset relationship with a subscript of a precoding matrix.

24. The apparatus according to any one of claims 13 to 23, wherein the reporting unit is configured to:

when reporting the information about the first-stage codebook, determine precision of the first-stage codebook based on the configuration information, and report information about a codebook with the precision of the first-stage codebook; or
when reporting the information about the second-stage codebook and the higher-stage codebook, determine precision of a current-stage codebook based on the configuration information, determine a range of the current-stage codebook based on information about a previous-stage codebook, and report, within the range of the current-stage codebook, information about a codebook with the precision of the current-stage codebook.

25. A communication method, comprising:

generating, by a radio access network RAN node, configuration information, wherein the configuration information is used to configure precision of a multi-stage codebook, and codebook precision at different stages is different;
sending, by the RAN node, the configuration information to a terminal, wherein the configuration information is used by the terminal to perform reporting for codebook information, information about an $M^{th}$-stage codebook limits a range of an $(M+1)^{th}$-stage codebook, and M is a positive integer and is less than a codebook stage quantity; and
receiving, by the RAN node, information that is about a codebook and reported by the terminal, and determining a precoding matrix based on the received information about the codebook.

26. The method according to claim 25, wherein the codebook information comprises a first codebook index and a second codebook index, the first codebook index is used to select a vector group, the vector group comprises a plurality of precoding vectors that reflect a long-term or wideband channel feature, the second codebook index is used to select a precoding vector from a vector group selected by using a first codebook index of information about a codebook at a same stage, and the precoding vector reflects a short-term or narrowband channel feature; and
information that is about a first-stage codebook and that is received by the RAN node comprises a first codebook index and a second codebook index, or comprises a second codebook index; and information that is about a second-stage codebook and a higher-stage codebook and that is received by the RAN node comprises a second codebook index.

27. The method according to claim 26, wherein that information about an $M^{th}$-stage codebook limits a range of an $(M+1)^{th}$-stage codebook comprises the following:
a second codebook index of the information about the $M^{th}$-stage codebook limits a value of a first codebook index of information about the $(M+1)^{th}$-stage codebook; or a first codebook index and a second codebook index that are of the information about the $M^{th}$-stage codebook limit a value of a first codebook index of information about the $(M+1)^{th}$-stage codebook.

28. The method according to claim 26 or 27, wherein the first codebook index and the second codebook index that are of the information about the first-stage codebook are reported together or are separately reported.

29. The method according to any one of claims 26 to 28, wherein the first codebook index comprises a horizontal-dimension codebook index and a vertical-dimension codebook index.

30. The method according to claim 29, wherein that information about an $M^{th}$-stage codebook limits a range of an $(M+1)^{th}$-stage codebook comprises the following:

the second codebook index of the information about the $M^{th}$-stage codebook limits a value of a horizontal-dimension codebook index of the information about the $(M+1)^{th}$-stage codebook; or a horizontal-dimension codebook index and the second codebook index that are of the information about the $M^{th}$-stage codebook limit a value of a horizontal-dimension codebook index of the information about the $(M+1)^{th}$-stage codebook; or the second codebook index of the information about the $M^{th}$-stage codebook limits a value of a vertical-dimension codebook index of the information about the $(M+1)^{th}$-stage codebook; or a vertical-dimension codebook index and the second codebook index that are of the information about the $M^{th}$-stage codebook limit a value of a vertical-dimension codebook index of the information about the $(M+1)^{th}$-stage codebook; or the second codebook index of the information about the $M^{th}$-stage codebook limits a value of a horizontal-dimension codebook index and a value of a vertical-dimension codebook index that are of the information about the $(M+1)^{th}$-stage codebook; or a horizontal-dimension codebook index, a vertical-dimension codebook index, and the second codebook index that are of the information about the $M^{th}$-stage codebook limit a value of a horizontal-dimension codebook index and a value of a vertical-dimension codebook index that are of the information about the $(M+1)^{th}$-stage codebook.

31. The method according to any one of claims 25 to 30, wherein partial codebook information in information that is about the multi-stage codebook and that is received by the RAN node comprises polarization phase information, and the polarization phase information is used to select a polarization phase.

32. The method according to claim 31, wherein the polarization phase information is information independent of a codebook index in codebook information that comprises the polarization phase information, or is a part of a codebook index.

33. The method according to claim 31 or 32, wherein the information that is about the first-stage codebook and that is received by the RAN node comprises the polarization phase information; and/or information that is about a highest-stage codebook and that is received by the RAN node comprises the polarization phase information.

34. The method according to any one of claims 25 to 33, wherein the configuration information comprises a codebook parameter, the codebook parameter comprises a plurality of values or indication information of a plurality of values, and each value corresponds to one codebook precision; or
the configuration information comprises a parameter field, the parameter field is used to indicate a value of a codebook parameter, the codebook parameter has a plurality of values, and each value corresponds to one codebook precision; or
the configuration information comprises a first configuration message and a second configuration message, the first configuration message comprises a plurality of values or indication information of a plurality of values of a codebook parameter, and the second configuration message is used to indicate a value selected from the plurality of values.

35. The method according to claim 34, wherein the value of the codebook parameter has a preset relationship with a subscript of the precoding matrix.

36. A communications apparatus, applied to a radio access network RAN node and comprising:

a generation unit, configured to generate configuration information, wherein the configuration information is used to configure precision of a multi-stage codebook, and codebook precision at different stages is different; a sending unit, configured to send the configuration information to a terminal, wherein the configuration information is used by the terminal to perform reporting for codebook information, information about an $M^{th}$-stage codebook limits a range of an $(M+1)^{th}$-stage codebook, and M is a positive integer and is less than a codebook stage quantity; a receiving unit, configured to receive information that is about a codebook and reported by the terminal; and a determining unit, configured to determine a precoding matrix based on the information that is about the codebook and received by the receiving unit.

37. The apparatus according to claim 36, wherein the codebook information comprises a first codebook index and a second codebook index, the first codebook index is used to select a vector group, the vector group comprises a plurality of precoding vectors that reflect a long-term or wideband channel feature, the second codebook index is used to select a precoding vector from a vector group selected by using a first codebook index of information about a codebook at a same stage, and the precoding vector reflects a short-term or narrowband channel feature; and information that is about a first-stage codebook and that is received by the receiving unit comprises a first codebook index and a second codebook index, or comprises a second codebook index; and information that is about a second-stage codebook and a higher-stage codebook and that is received by the receiving unit comprises a second codebook index.

38. The apparatus according to claim 37, wherein that information about an $M^{th}$-stage codebook limits a range of an $(M+1)^{th}$-stage codebook comprises the following:
a second codebook index of the information about the $M^{th}$-stage codebook limits a value of a first codebook index of information about the $(M+1)^{th}$-stage codebook; or a first codebook index and a second codebook index that are of the information about the $M^{th}$-stage codebook limit a value of a first codebook index of information about the $(M+1)^{th}$-stage codebook.

39. The apparatus according to claim 37 or 38, wherein the first codebook index and the second codebook index that are of the information about the first-stage codebook are reported together or are separately reported.

40. The apparatus according to any one of claims 36 to 39, wherein the first codebook index comprises a horizontal-dimension codebook index and a vertical-dimension codebook index.

41. The apparatus according to claim 40, wherein that information about an $M^{th}$-stage codebook limits a range of an $(M+1)^{th}$-stage codebook comprises the following:

the second codebook index of the information about the $M^{th}$-stage codebook limits a value of a horizontal-dimension codebook index of the information about the $(M+1)^{th}$-stage codebook; or a horizontal-dimension codebook index and the second codebook index that are of the information about the $M^{th}$-stage codebook limit a value of a horizontal-dimension codebook index of the information about the $(M+1)^{th}$-stage codebook; or the second codebook index of the information about the $M^{th}$-stage codebook limits a value of a vertical-dimension codebook index of the information about the $(M+1)^{th}$-stage codebook; or a vertical-dimension codebook index and the second codebook index that are of the information about the $M^{th}$-stage codebook limit a value of a vertical-dimension codebook index of the information about the $(M+1)^{th}$-stage codebook; or the second codebook index of the information about the $M^{th}$-stage codebook limits a value of a horizontal-dimension codebook index and a value of a vertical-dimension codebook index that are of the information about the $(M+1)^{th}$-stage codebook; or a horizontal-dimension codebook index, a vertical-dimension codebook index, and the second codebook index that are of the information about the $M^{th}$-stage codebook limit a value of a horizontal-dimension codebook index and a value of a vertical-dimension codebook index that are of the information about the $(M+1)^{th}$-stage codebook.

42. The apparatus according to any one of claims 36 to 41, wherein partial codebook information in information that is about the multi-stage codebook and that is received by the receiving unit comprises polarization phase information, and the polarization phase information is used to select a polarization phase.

43. The apparatus according to claim 42, wherein the polarization phase information is information independent of a codebook index in codebook information that comprises the polarization phase information, or is a part of a codebook index.

44. The apparatus according to claim 42 or 43, wherein the information that is about the first-stage codebook and that is received by the receiving unit comprises the polarization phase information; and/or information that is about a highest-stage codebook and that is received by the receiving unit comprises the polarization phase information.

45. The apparatus according to any one of claims 36 to 44, wherein the configuration information comprises a codebook parameter, the codebook parameter comprises a plurality of values or indication information of a plurality of values, and each value corresponds to one codebook precision; or
   the configuration information comprises a parameter field, the parameter field is used to indicate a value of a codebook parameter, the codebook parameter has a plurality of values, and each value corresponds to one codebook precision; or
   the configuration information comprises a first configuration message and a second configuration message, the first configuration message comprises a plurality of values or indication information of a plurality of values of a codebook parameter, and the second configuration message is used to indicate a value selected from the plurality of values.

46. The apparatus according to claim 45, wherein the value of the codebook parameter has a preset relationship with a subscript of the precoding matrix.

47. A communications apparatus, applied to a terminal and comprising at least one processor and a memory, wherein the at least one processor is configured to perform the method according to any one of claims 1 to 12.

48. A communications apparatus, applied to a radio access network RAN node and comprising at least one processor and a memory, wherein the at least one processor is configured to perform the method according to any one of claims 25 to 35.

49. A terminal, comprising the communications apparatus according to any one of claims 13 to 24 or according to claim 47.

50. A computer readable storage medium, comprising a program configured to perform the method according to any one of claims 1 to 12 or according to any one of claims 25 to 35.

51. A program, configured to perform the method according to any one of claims 1 to 12 or according to any one of claims 25 to 35.

FIG. 1

FIG. 2

8H2V

(1)

4H4V

(2)

16H1V

(3)

6H2V

(4)

4H3V

(5)

4H2V

(6)

FIG. 3

Terminal

RAN node

S410: Generate
configuration
information

S420: Configuration information

S430: Information about a codebook

S440: Determine a
precoding matrix

FIG. 4

First-stage precision

Second-stage precision

Third-stage precision

Fourth-stage precision

$i_1=0$    $2\pi/4$

$i_1=0$    $2\pi/8$

$i_1=0$    $2\pi/16$

$i_1=0$    $2\pi/32$

$i_1=2$

$i_1=1$

$i_1=1$

$i_1=3$

...

...

$i_1=4$

$i_1=7$

$i_1=15$

FIG. 5

FIG. 6

FIG. 7

FIG. 8

FIG. 9

1010

Terminal

Processor

Memory

Transceiver apparatus

1020

1030

FIG. 10

1110

1120

1100

Generation unit

Sending unit

Receiving unit

Determining unit

1130

1140

FIG. 11

1232

Storage element

1233

Interface

1210

1220

Radio frequency apparatus

1230

Baseband apparatus

1231

Processing element

FIG. 12

# INTERNATIONAL SEARCH REPORT

International application No.

PCT/CN2018/071618

## A. CLASSIFICATION OF SUBJECT MATTER

H04B 7/0456 (2017.01) i

According to International Patent Classification (IPC) or to both national classification and IPC

## B. FIELDS SEARCHED

Minimum documentation searched (classification system followed by classification symbols)

H04B; H04L

Documentation searched other than minimum documentation to the extent that such documents are included in the fields searched

Electronic data base consulted during the international search (name of data base and, where practicable, search terms used)

EPODOC, WPI, CNPAT, CNKI: 两级、二级、双级、多级、码本、码字、码书、精度、预编码, two-stage, multilevel, codebook, code book, precision, precod+, matrix, matrices

## C. DOCUMENTS CONSIDERED TO BE RELEVANT

| Category* | Citation of document, with indication, where appropriate, of the relevant passages | Relevant to claim No. |
|---|---|---|
| X | CN 102158315 A (MARVELL INTERNATIONAL TRADE CO., LTD.) 17 August 2011 (17.08.2011), the abstract, description, paragraphs [0031]-[0045], and figures 1-5 | 1-51 |
| A | CN 102255701 A (TONGJI UNIVERSITY) 23 November 2011 (23.11.2011), entire document | 1-51 |
| A | CN 101834707 A (ZTE CORPORATION) 15 September 2010 (15.09.2010), entire document | 1-51 |
| A | WO 2011097881 A1 (ZTE CORPORATION) 18 August 2011 (18.08.2011), entire document | 1-51 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 March 2018 | 30 March 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>MEN, Le<br><br>Telephone No. (86-10) 53961687 |

Form PCT/ISA /210 (second sheet) (July 2009)

## INTERNATIONAL SEARCH REPORT
### Information on patent family members

| | International application No. |
|---|---|
| | PCT/CN2018/071618 |

| Patent Documents referred in the Report | Publication Date | Patent Family | Publication Date |
|---|---|---|---|
| CN 102158315 A | 17 August 2011 | US 2011194638 A1 | 11 August 2011 |
| | | US 2014105317 A1 | 17 April 2014 |
| | | JP 2011223555 A | 04 November 2011 |
| | | EP 2360853 A2 | 24 August 2011 |
| CN 102255701 A | 23 November 2011 | None | |
| CN 101834707 A | 15 September 2010 | None | |
| WO 2011097881 A1 | 18 August 2011 | CN 101771514 A | 07 July 2010 |

Form PCT/ISA /210 (patent family annex) (July 2009)